# EUROPÄISCHE PATENTSCHRIFT

(11) **EP 2 409 665 B1**
(45) Veröffentlichungstag und Bekanntmachung des Hinweises auf die Patenterteilung: **27.01.2016**
(21) Anmeldenummer: 11163340.0
(22) Anmeldetag: 21.04.2011
(51) Int. Cl.: A61C 1/00

(54) **Medizinische Behandlungsvorrichtung**
Medical treatment device
Dispositif de traitement médical

(30) Priorität: 22.07.2010 EP 10170440
(43) Veröffentlichungstag der Anmeldung: 25.01.2012
(73) Patentinhaber: W & H Dentalwerk Bürmoos GmbH, 5111 Bürmoos (AT)
(72) Erfinder: Pruckner, Christian, 1190 Wien (AT)
(74) Vertreter: Appelt, Christian W.

(56) Entgegenhaltungen:
- EP-A2- 0 394 583
- US-A- 4 168 447
- US-A- 5 198 713
- US-A- 5 477 100
- US-A1- 2002 129 454
- US-A1- 2007 085 611

## Beschreibung

Die vorliegende Erfindung bezieht sich auf eine medizinische Behandlungsvorrichtung mit einem Sensor und insbesondere auf ein elektrisch versorgtes, medizinisches, insbesondere dentalmedizinisches Instrument, insbesondere mit einem Handstück, das einen kombinierten kapazitiv-induktiven Sensor aufweist.

Bei medizinischen, insbesondere dentalmedizinischen, elektrisch versorgten Instrumenten ist es häufig notwendig, die Betriebszustand ständig zu überwachen, um beispielsweise auf Basis dieser Messungen die Leistung eines elektrischen Antriebs oder eines anderen elektrischen Bauteils zu steuern oder zu regeln. Dies ist für ein medizinisches Instrument wie beispielsweise ein elektrisch betriebenes Zahnsteinentfernungs-Handstück (Scaler-Handstück) sehr wichtig, da diese Instrumente beispielsweise einen elektrischen Schwingungsgenerator (z.B. einen Piezo-Motor) aufweisen. Der Piezo-Motor (Schwingungsgenerator mit Piezoelementen) arbeitet im Idealfall mit einer Resonanzfrequenz, die für einen optimalen Betrieb durch das angelegte elektrische Signal bereitzustellen ist. Ein Problem dabei ist, dass die Resonanzfrequenz beispielsweise lastabhängig ist und sich somit während der Nutzung ständig ändern kann.

In der US 6,976,843 B2 wird eine dentale Behandlungsvorrichtung beschrieben, die es erlaubt, mehrere Handstücke, die mit unterschiedlichen Resonanzfrequenzen arbeiten, mit einem Ultraschallgenerator zu betreiben. Die Anpassung auf die Resonanzfrequenzen erfolgt über passive Elemente wie beispielsweise Kondensatoren, die zusammen mit dem Handstück mit dem Ultraschallgenerator verbunden werden. Die passiven Elemente haben den Effekt, dass die Resonanzfrequenz, die der Ultraschallgenerator für das jeweilige Handstück bereitstellt, entsprechend auf das Handstück angepasst ist.

US 4, 1 68,447 A offenbart einen Scaler mit Piezoantrieb, dessen Stromversorgung über zwei Elektroden erfolgt.

In der Patentschrift EP 1 191 895 B1 wird eine Kontrollvorrichtung für ein zahnärztliches Ultraschallhandstück beschrieben, welches ausgebildet ist, um eine Phasenverschiebung, die zwischen der Spannung und dem gelieferten Strom infolge einer intrinsischen Kapazität des Ultraschallerzeugers entsteht, elektrisch zu kompensieren. Dazu ist neben dem primären Stromkreis ein sekundärer Stromkreis ausgebildet, der mit dem primären Stromkreis über einen Wandler verbunden ist und auf der Sekundärseite eine variable Induktivität und eine variable Kapazität aufweist. Wenn das Handstück beispielsweise in Folge von Belastung nicht mit der Resonanzfrequenz arbeitet und das Strom- und Spannungssignal eine relative Phasenverschiebung aufweisen, wird dann auf der Sekundärseite des Wandlers die Induktivität geändert, so dass sich damit ebenfalls die Phase des Stroms auf der primäre Seite verschiebt und somit das Handstück wiederum in Resonanz gebracht werden kann.

Da die erste Patentschrift lediglich eine Anpassung der Resonanzfrequenz durch eine oder mehrere passive Elemente erlaubt und somit lediglich eine Anpassung auf diskrete Resonanzfrequenzen möglich ist, nutzt die zweite Patentschrift einen Sekundärstromkreis aus, um zunächst eine Messgröße wie beispielsweise eine relative Phasenverschiebung zwischen dem Strom- und Spannungssignal zu erfassen und anschließend durch eine kontinuierliche Änderung der Induktivität auf der Sekundärseite die festgestellte Phasenverschiebung zu kompensieren.

Nachteilig an beiden Lösungen ist, dass keine flexible und verlustarme Erfassung des Betriebszustandes und eine darauf basierende Anpassung möglich ist, die einen resonanten Betrieb ständig ermöglicht. Ein weiterer Nachteil ist, dass die Regelung infolge zusätzlicher Induktivitäten/Kapazitäten mit Verlusten verbunden ist, die für viele Anwendungen nicht akzeptabel sind.

Daher ist es eine Aufgabe der vorliegende Erfindung, eine verbesserte medizinische Behandlungsvorrichtung und eine verbesserte Regelung der medizinischen Behandlungsvorrichtung bereitzustellen, die es insbesondere erlauben, den Betriebszustand der Behandlungsvorrichtung durch möglichst einfache Mittel und möglichst verlustarm ständig zu erfassen und zu regeln.

Diese Aufgabe wird durch eine medizinische Behandlungsvorrichtung mit einem Sensor nach Anspruch 1 und einem Verfahren zur Regelung einer Last der medizinischen Behandlungsvorrichtung nach Anspruch 15 gelöst.

Gemäß der vorliegenden Erfindung umfasst die medizinische Behandlungsvorrichtung einen Sensor zum Erfassen von Betriebszuständen, wobei der Sensor eine erste Planarelektrode und eine zweite Planarelektrode aufweist. Die erste Planarelektrode ist zwischen einem Strompfadeingang und einem Strompfadausgang angeordnet, wobei ein elektrisches Eingangssignal zur Versorgung der medizinischen Behandlungsvorrichtung an dem Strompfadeingang anlegbar ist und eine Last der medizinischen Behandlungsvorrichtung an dem Strompfadausgang anlegbar ist. Die zweite Planarelektrode ist von der ersten Planarelektrode durch ein erstes Dielektrikum getrennt und weist einen ersten Messsignalanschluss zum Abgreifen eines kapazitiven Messsignals auf. Bei weiteren Ausführungsbeispielen weist der Sensor weiterhin ein Induktionselement auf. Die erste Planarelektrode kann außerdem als eine Planarspule ausgebildet sein. Das Induktionselement ist von der ersten Planarelektrode durch ein zweites Dielektrikum getrennt und zwischen einen zweiten Messsignalanschluss und einen dritten Messsignalanschluss ausgebildet. Zwischen dem zweiten Messsignalanschluss und dem dritten Messsignalanschluss ist ein induktives Messsignal abgreifbar. Die erste Planarelektrode weist einen Querschnitt senkrecht zur Ausbreitungsrichtung des elektrischen Eingangssignals auf, so dass die erste Planarelektrode und die zweiten Planarelektrode kapazitiv koppelbar sind und die erste Planarelektrode und das Induktionselement induktiv koppelbar sind.

Kapazitiv/induktiv koppelbar bedeutet dabei beispielsweise, dass die gekoppelten Komponenten derart miteinander verbunden sind, dass die Kopplung in einem elektrischen Ersatzschaltbild als Kondensator oder als Spule oder als Transformator darstellbar ist. Das kann beispielsweise dadurch erreicht werden, dass der Querschnitt der ersten Planarelektrode entlang der planaren Richtung der Planarelektrode/Planarspule länglich ist, so dass eine der beiden Ausdehnung länger ist und sich in der (planaren) Ebene der Planarelektrode erstreckt. Damit ist eine sehr kompakte Bauweise möglich, so dass der Sensor an verschiedenen Stellen in der Behandlungsvorrichtung angeordnet werden kann. Im Zuge der zunehmenden Miniaturisierung stellt dies einen wichtigen Vorteil dar.

Bei weiteren Ausführungsbeispielen weist das Induktionselement eine weitere Planarspule (zweite Planarspule) mit einer größeren Windungszahl als die Planarspule (erste Planarspule) auf. Damit ist es möglich, das induktive Messsignal entsprechend zu transformieren, so dass beispielsweise das induktive Messsignal in einen anderen Spannungsbereich transformiert wird und somit eine bessere Signalerfassung bzw. Signaltrennung möglich wird.

Bei weiteren Ausführungsbeispielen ist die zur Planarspule gewickelte erste Planarelektrode derart ausgebildet, dass sie insbesondere einen rechteckförmigen Querschnitt aufweist (beispielsweise jede einzelne Windung), wobei die längere Rechtecksseite beispielsweise parallel zur zweiten Planarelektroden ausgerichtet ist. Der Querschnitt bezieht sich dabei beispielsweise auf eine Schnittebene senkrecht zur Stromrichtung der Messsignale oder des elektrischen Eingangssignals der medizinischen Behandlungsvorrichtung. Beispielsweise kann die zweite Planarelektrode als eine ebene Kondensatorplatte ausgebildet sein, so dass die längere Rechteckseite der ersten Planarelektrode parallel zu der Kondensatorplatte angeordnet ist. Das hat den Effekt, dass damit die kapazitive Kopplung zwischen der ersten Planarelektrode und der zweiten Planarelektrode verstärkt wird, da neben dem Abstand für die Kapazität der kapazitiven Kopplung der sich überlappende Flächeninhalt der gegenüberliegenden Kondensatorelektroden (ersten und zweiten Planarelektrode) entscheidend ist. Dieser Flächeninhalt kann maximiert werden, indem die erste Planarelektroden einen möglichst langgestreckten Querschnitt aufweist, wobei beispielsweise die Richtung senkrecht auf der zweiten Planarelektrode (=Normalenrichtung) minimiert wird, und zwar bei konstanter Querschnittsfläche, die entsprechend der genutzten Stromdichte wählbar, ist.

Bei weiteren Ausführungsbeispielen kann die Querschnittsfläche des Induktionselementes mindestens um einen Faktor 10 (oder einer der folgenden Faktor: 2, 5, 20, 50 oder 100) kleiner gewählt werden als die Querschnittsfläche der ersten Planarelektrode, wobei der Flächeninhalt der sich gegenüberliegenden ersten Planarelektrode und des Induktionselementes möglichst gering gewählt wird. Damit wird zum Einen erreicht, dass die kapazitive Kopplung zwischen der ersten bzw. der zweiten Planarelektrode hin zu dem Induktionselement minimiert wird, gleichzeitig aber die induktive Kopplung zwischen der ersten Planarelektrode und dem Induktionselement maximiert werden kann, da die induktive Kopplung lediglich von der Anzahl der Windungen und der eingeschlossenen Fläche abhängt (wiederum bei konstanter Querschnittsfläche, die entsprechend der Stromdichte wählbar ist).

Bei weiteren Ausführungsbeispielen ist die erste Planarelektrode zwischen der zweiten Planarelektrode und dem Induktionselement angeordnet. Optional können ferner die erste Planarspule und die zweite Planarspule um einen weichmagnetischen Spulenkern gewickelt werden oder in weichmagnetischem Material zumindest teilweise eingebettet werden. Damit wird erreicht, dass die magnetische Kopplung zwischen den beiden Planarspulen (d.h. zwischen der ersten Planarelektrode und dem Induktionselement) verbessert wird und gleichzeitig eine Abschirmung hinsichtlich äußerer elektromagnetischer Felder erreicht wird.

Bei weiteren Ausführungsbeispielen sind die zweite Planarelektroden und das Induktionselement lateral nebeneinander angeordnet und durch eine gemeinsame dielektrische Schicht (gemeinsame Dielektrikumsschicht) von der ersten Planarelektroden getrennt, so dass die erste Planarelektroden auf der einen Seite der gemeinsamen dielektrischen Schicht ausgebildet ist und dazu gegenüberliegend sowohl die zweite Planarelektrode als auch das Induktionselement (jedoch lateral zueinander versetzt) angeordnet sind. Das hat den Effekt, dass damit eine weitere Verringerung der Bauteilgröße möglich wird, wobei insbesondere die Höhe des Bauelementes weiter minimiert wird, so dass das Bauelement flexibel an verschiedenen Stellen der medizinischen Behandlungsvorrichtung anbringbar ist (z.B. in einem Handstück oder in der Versorgungsleitung integrierbar ist).

Bei weiteren Ausführungsbeispielen weist die erste Planarelektrode einen ersten Teil und einen zweiten Teil auf, wobei der erste Teil optional als eine Kondensatorplatte ausgebildet sein kann und der zweite Teil als Planarspule gewickelt ist, wobei beide Teile mit einer Verbindung miteinander elektrisch verbunden sind. Bei diesen Ausführungsbeispielen können beispielsweise die zweite Planarelektrode und der erste Teil auf einander gegenüberliegenden Seiten des ersten Dielektrikums derart angeordnet sein, so dass deren kapazitive Kopplung zwischen beiden maximiert wird. In gleicher Weise sind das Induktionselement und der zweite Teil auf einander gegenüberliegenden Seiten des zweiten Dielektrikums derart angeordnet, dass deren induktive Kopplung möglichst maximiert wird. Bei dieser Ausführungsform ist es möglich, die kapazitive Kopplung einerseits von der induktiven Kopplung andererseits räumlich zu trennen, so dass deren Wechselwirkung/Störung minimiert werden kann. Optional kann dies durch eine zusätzliche Abschirmung zwischen beiden Sensorteilen noch weiter verbessert werden. Außerdem wird es damit möglich, die Bauteilhöhe zu verringern, da die beiden Sensorteile nebeneinander angeordnet werden können. Optional kann das Induktionselement als eine Spule mit deutlich höherer Windungszahl gewickelt werden, so dass die damit erforderliche zusätzliche Höhe nicht auf Kosten der Gesamtbauteilhöhe geht.

Der Begriff lateral bezieht sich hier und im Folgenden auf die flächenmäßige Ausgestaltung, so dass zwei Elemente lateral nebeneinander sind, wenn die beiden Elemente in einer Schnittdarstellung senkrecht zu einer Signalausbreitungsrichtung (Eingangssignal oder kapazitives/induktives Messsignal) vertikal auf gleicher Höhe erscheinen, wobei die vertikale Richtung mit der Flächennormalen einer der Hauptoberflächen der flächenmäßigen Ausgestaltung definiert werden kann. Der Begriff planar (bei Planarelektrode, Planarspule) bezieht in gleicher Weise auf eine flächige Ausgestaltung, wobei unter flächig jede Anordnung verstanden werden kann, bei der sich die Orientierung der Flächennormale in zumindest einer Hauptausdehnungsrichtungen (beträgt wenigstens 5% einer maximalen Ausdehnung des betreffenden Objektes) um höchstens 10° (oder höchstens 20° oder 50°) ändert. Alternativ kann eine Planarelektrode auch so definiert werden, dass sie als eine Kondensatorplatte geeignet ist und ein für die medizinische Behandlungsvorrichtung detektierbares kapazitives Signal liefert. Somit sind ebenfalls koaxiale Anordnungen mit abgedeckt. Planarspulen können beispielsweise so definiert werden, dass es sich dabei um Spulen handelt, die im Wesentlichen in einer Ebene gewickelt sind. Die Ebene kann wiederum so definiert werden, dass sie eine Flächennormale aufweist, deren Orientierung sich bei einer Bewegung in zumindest einer Richtung um nicht mehr als 10° (oder höchstens 20° oder höchstens 50°) ändert. Die Orientierung definiert wiederum die Richtung im drei-dimensionalen Raum. Der Begriff länglich definiert eine geometrische Ausgestaltung, bei der das Element eine maximale Ausdehnung aufweist, die die minimale Ausdehnung um zumindest das 2-fachen oder das 10-fache oder das 100-fache übersteigt, wobei die maximale und minimale Ausdehnung in verschiedenen Raumrichtungen gemessen werden.

Weitere Ausführungsbeispiele weisen ebenfalls eine Auswerteeinheit auf, um das kapazitive und induktive Messsignal zu erfassen und daraus für das elektrische Eingangssignal ein Stromsignal und/oder ein Spannungssignal und/oder ihre relative Phase zueinander zu ermitteln. Bei dem Stromsignal/Spannungssignal handelt es sich beispielsweise um die Amplitude, die Frequenz und/oder die Phasenbeziehung der Stromstärke/Spannung (z.B. die Stromstärke *I* als Funktion der Amplitude *A* der Frequenz f und der Phase ϕ bzw. analog für die Spannung). Das so ermittelte Strom- und Spannungssignal und die relative Phasenbeziehung können weiter einer Versorgungseinrichtung, die der Energieversorgung der Behandlungsvorrichtung dient, bereitgestellt werden, um dadurch beispielsweise die relative Phasenbeziehung zwischen dem Strom- und Spannungssignal und/oder die Frequenz für das elektrische Eingangssignal zu ändern. Die Änderung kann beispielsweise über ein Steuersignal erfolgen, welches von der Auswerteeinheit ausgegeben und der Versorgungseinrichtung zugeführt wird. Damit wird ein geschlossener Regelkreis möglich, der ständig das Strom- und Spannungssignal überwacht und entsprechend ändert. Die Versorgungseinrichtung erzeugt beispielsweise das elektrische Eingangssignal. Das Steuersignal ist beispielsweise ausgebildet, um die Versorgungseinrichtung zu einer Änderung des elektrischen Eingangssignals zu veranlassen, um beispielsweise eine Phasenverschiebung und/oder Frequenz zu ändern oder zu eliminieren oder um eine Resonanz der medizinischen Behandlungsvorrichtung (resonanten Betrieb) wieder herzustellen. Ein Vorteil der Auswerteeinheit besteht somit darin, dass durch einfache Mittel der Betriebszustand der Behandlungsvorrichtung wunschgemäß (z.B. resonanter Betrieb) bei sich ständig ändernder Last einstellbar ist.

Optional ist bei weiteren Ausführungsbeispielen die Auswerteeinheit ausgebildet, um aus dem kapazitiven und induktiven Messsignal eine Leistungsaufnahme der medizinischen Behandlungsvorrichtung zu ermitteln bzw. über das Steuersignal zu ändern. Das kapazitive und induktive Messsignal kann beispielsweise hinsichtlich eines ersten und zweiten Referenzpotentials genommen werden, wobei das erste und zweite Referenzpotential gleich oder auch unterschiedlich voneinander gewählt sein können und darüber hinaus gleich oder unterschiedlich zu dem Massenpotential sein können. Damit wird eine galvanische Trennung erreicht. Ein Vorteil der unterschiedlichen Referenzpotentiale ist, dass es an die Stromsignalstärke angepasst werden kann.

Bei weiteren Ausführungsbeispielen weisen die verwandten Dielektrika unterschiedliche relative Dielektrizitätskonstanten und/oder unterschiedliche relative magnetische Permeabilitäten auf. Mit der erfindungsgemäßen medizinischen Behandlungsvorrichtung und dem integrierten Sensor wird es somit beispielsweise möglich, die Spannung und die Stromstärke unabhängig voneinander zu messen, wobei für die zwei Messungen eine kapazitive Messung und eine induktive Messung genutzt wird.

Optional ist es ebenfalls möglich, den Sensor der medizinischen Behandlungsvorrichtung durch eine Leiterplatte zu bilden, auf der die Planarelektroden und die dielektrischen Schichten (Dielektrika) als Schichten übereinander ausgebildet sind bzw. dass die Leiterplatte selbst eine der dielektrischen Schichten (d.h. erstes oder zweites Dielektrikum) darstellt. Eine koaxiale Anordnung ist ebenso möglich, bei der die einzelnen Planarelektroden (halb) zylinderförmig mit radial unterschiedlichen Abständen zueinander angeordnet sind und durch dielektrische Schichten voneinander getrennt sind, so dass auch die dielektrischen Schichten zueinander koaxial angeordnet sein können. Vorteile dieser Ausführungsbeispiele bestehen darin, dass einfache Mittel (wie Leiterplatten) genutzt werden können und dass die Positionierung (z.B. bei koaxialer Anordnung in einer Versorgungsleitung) flexibel erfolgen kann.

Ausführungsbeispiele umfassen ebenfalls ein Verfahren zur Regelung einer Last der medizinischen Behandlungsvorrichtung, die mit einem elektrischen Eingangssignals über eine erste Planarelektrode von einer Versorgungseinheit versorgt wird, eine zweite Planarelektrode aufweist, an der ein kapazitives Messsignal abgreifbar ist, und ein Induktionselement aufweist, an dem ein induktives Messsignal abgreifbar ist. Das Verfahren umfasst die folgenden Schritten: ein Erfassen des kapazitiven Messsignals, ein Erfassen des induktiven Messsignals, ein Ermitteln eines Steuersignals basierend auf dem kapazitiven Messsignal und dem induktiven Messsignal und ein Bereitstellen des Steuersignals einer Versorgungseinheit derart, dass das Steuersignal das elektrische Eingangssignal ändert.

Die medizinische Behandlungsvorrichtung mit dem beschriebenen Sensor weist bei weiteren Ausführungsbeispielen ein Handstück beispielsweise mit einem Piezo-Motor oder einem Elektromotor als Last auf, welches beispielsweise für eine dentale Behandlung und insbesondere für eine Zahnsteinentfernung ausgebildet ist. Alternativ ist der Sensor in einem Steuergerät für das Handstück mit Piezo-Motor angeordnet. Optional kann der beschriebene Sensor ebenfalls in einer Versorgungsleitung zwischen dem Steuergerät und dem Handstück ausgebildet sein.

Ausführungsbeispiele der vorliegenden Erfindung weisen gegenüber dem Stand der Technik eine Reihe von Vorteilen auf. Zum Beispiel ist der Sensor sehr klein und kompakt und die kapazitive und induktive Kopplung belasten die medizinische Behandlungsvorrichtung nicht. Der Sensor misst beispielsweise direkt dort, wo die Last ankoppelt oder wo eine hohe Spannung und/oder ein hoher Strom anliegen (z.B. deren Maximalwerte in der Behandlungsvorrichtung). Somit ist eine direkte Rückkopplung auf die Versorgungseinheit möglich (die dann die Versorgungsspannung/-strom/-frequenz entsprechend ändert), ohne dass es zusätzlicher variabler InduktivitätenlKapazifäten bedarf, was zu einer Verringerung von Verlusten führt. Die vorteilhafte geringe Baugröße wird auch dadurch erreicht, dass die erste Planarelektrode sowohl als Elektrode für das kapazitive Messsignal als auch als Elektrode (Spule) für das induktive Messsignal wirkt.

Weitere Vorteile sind, dass die mit dem Sensor ermittelten Werte verwendet werden können, um beispielsweise durch entsprechende Schaltungen oder Steuervorrichtung die Impedanz, Wirkleistung, Blindleistung und andere Parameter abzuleiten oder zu berechnen und für eine Steuerung oder Regelung zu verwenden. Die mit dem Sensor ermittelten Messwerte können benutzt werden, um die Leistung elektrisch betriebener Scaler-Handstücke oder Piezo-Scaler zu steuern und zu regeln und/oder den Resonanzpunkt (oder die Resonanzfrequenz) für das an den Scaler angeschlossene Werkzeug (Scaler-Tip) zu suchen, zu halten oder anzuzeigen.

Die Erfindung wird nachfolgend Bezugnehmend auf die beiliegenden Zeichnungen näher beschrieben, wobei:
- Fig. 1: einen Sensor der medizinischen Behandlungsvorrichtung nach Ausführungsbeispielen der vorliegenden Erfindung zeigt;
- Fig. 2: eine Darstellung des Grundprinzips des Sensors gemäß Ausführungsbeispielen zeigt;
- Fig. 3: eine Seitenansicht eines Multilayerprints gemäß einem Ausführungsbeispiel zeigt;
- Fig. 4: Aufsichten der Primär- und Sekundärwicklung und der Sekundärplatte zeigen;
- Fig. 5A,B: Seitenansichten eines weiteren Ausführungsbeispieles unter Nutzung weichmagnetischer Spulenkerne zeigen;
- Fig. 6: eine Seitenansicht eines Ausführungsbeispieles zeigt, bei dem die zweite Planarelektrode und das Induktionselement nebeneinander angeordnet sind;
- Fig. 7: eine Seitenansicht der in Fig. 6 gezeigten Ausführungsform unter Nutzung eines weichmagnetischen Spulenkern zeigt;
- Fig. 8: eine Seitenansicht eines Ausführungsbeispieles zeigt, bei der das Induktionselement in einem weichmagnetischen Spulenkern eingebettet ist;
- Fig. 9A, B: Seitenansichten von Multilayerprints mit eingelegten Ferritmaterial gemäß weiterer Ausführungsbeispiele zeigen;
- Fig. 10: eine Seitenansicht eines Ausführungsbeispieles zeigt, bei der die Planarelektroden lateral versetzt entlang eines gemeinsamen Dielektrikums angeordnet sind;
- Fig. 11: eine Seitenansicht eines Ausführungsbeispieles zeigt, bei der die einzelnen Sensorkomponenten räumlich voneinander getrennt sind;
- Fig. 12: Aufsichten auf die Primärseite und auf die Sekundärseite des Ausführungsbeispiels der Fig. 11 zeigt;
- Fig. 13: eine idealisierte Darstellung einer zu kompensierenden Phasenverschiebung zwischen einem Strommesssignal und einem Spannungsmesssignal zeigt;
- Fig. 14: ein Ausführungsbeispiel, einer medizinischen, insbesondere dentalen, Behandlungsvorrichtung mit einem Handgriff zur Zahnsteinentfemung zeigt; und
- Fig. 15: ein Ausführungsbeispiel mit nur einem oder mehreren kapazitiven Sensoren.

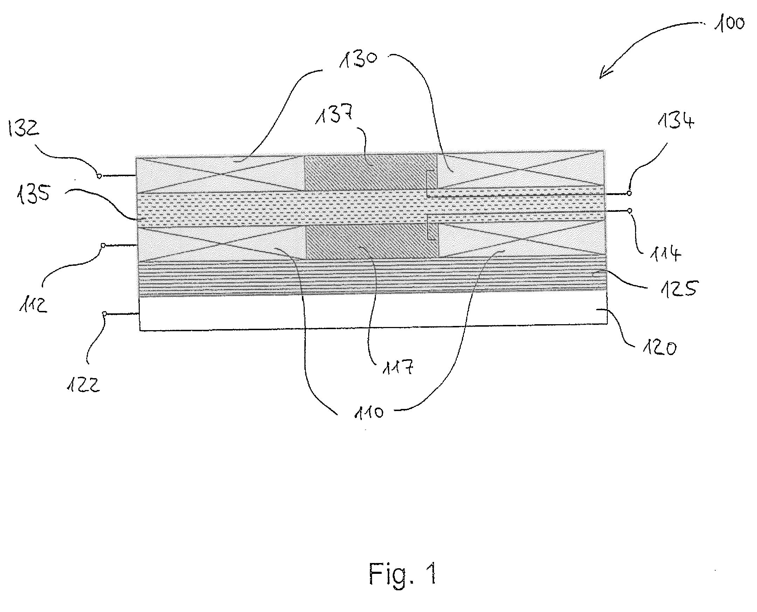

Fig. 1 zeigt eine medizinische, insbesondere dentale, Behandlungsvorrichtung 100 mit einem Sensor zur Erfassung von Betriebszuständen mit einer ersten Planarelektrode 110, die zwischen einem Strompfadeingang 112 und einem Strompfadausgang 114 angeordnet ist, wobei ein elektrisches Eingangssignal zur Versorgung der medizinischen Behandlungsvorrichtung an dem Strompfadeingang 112 anlegbar ist und eine Last der medizinischen Behandlungsvorrichtung 100 an dem Strompfadausgang 114 anlegbar ist und die erste Planarelektrode 110 als eine erste Planarspule ausgebildet ist (beispielsweise durch wickeln oder bedrucken). Die Vorrichtung 100 umfasst ferner eine zweite Planarelektrode 120, die von der ersten Planarelektrode 110 durch ein erstes Dielektrikum 125 getrennt ist und einen ersten Messsignalausgang 122 zum Abgreifen eines kapazitiven Messsignals aufweist. Die Vorrichtung 100 umfasst weiter eine Induktionselement 130, das von der ersten Planarelektrode 110 durch ein zweites Dielektrikum 135 getrennt ist und zwischen einem zweiten Messsignalanschluss 132 und einem dritten Messsignalanschluss 134 ausgebildet ist, wobei zwischen dem zweiten Messsignalanschluss 132 und dem dritten Messsignalanschluss 134 ein induktives Messsignal abgreifbar ist. Bei der Vorrichtung 100 weist die erste Planarelektrode 110 einen länglichen Querschnitt in planarer Richtung der ersten Planarspule auf, so dass die erste Planarelektrode 110 und die zweite Planarelektrode 120 kapazitiv koppelbar sind und die erste Planarelektrode 110 und das Induktionselement 130 induktiv koppelbar sind.

Die erste als Planarspule ausgebildete Planarelektrode 110 kann optional einen ersten Spulenkern 117 (z.B. aus weichmagnetischem Material oder einem weiteren Dielektrikum) aufweisen. Ebenso kann das Induktionselement 130 als zweite Planarspule ausgebildet sein (d.h. planar gewickelt sein) und einen zweiten Spulenkern 137 aufweisen, der ebenso ein weichmagnetisches Material oder ein Dielektrikum umfassen kann. Der erste und der zweite Spulenkern 117, 137 ermöglichen eine verbesserte induktive Kopplung zwischen der ersten Planarelektrode 110 und dem Induktionselement 130. Optional ist es ebenfalls möglich, dass das zweite Dielektrikums 135 nicht vollflächig ausgebildet ist, sondern lediglich zwischen den Wicklungen der Spulen (die durch die gekreuzten Flächen dargestellt sind) ausgebildet ist. Zwischen dem ersten Spulenkern 117 der ersten Planarelektrode 110 und dem zweiten Spulenkern 137 des Induktionselementes 130 kann ebenfalls weichmagnetisches Material oder anderes magnetisches Material ausgebildet sein, um die induktive Kopplung zwischen den Planarspulen der ersten Planarelektrode 110 und dem Induktionselement 130 zu verbessern. Ebenso können andere magnetische Materialien verwandt werden, um die magnetische Kopplung zu verbessern (z.B. verschiedene Formen von Ferriten).

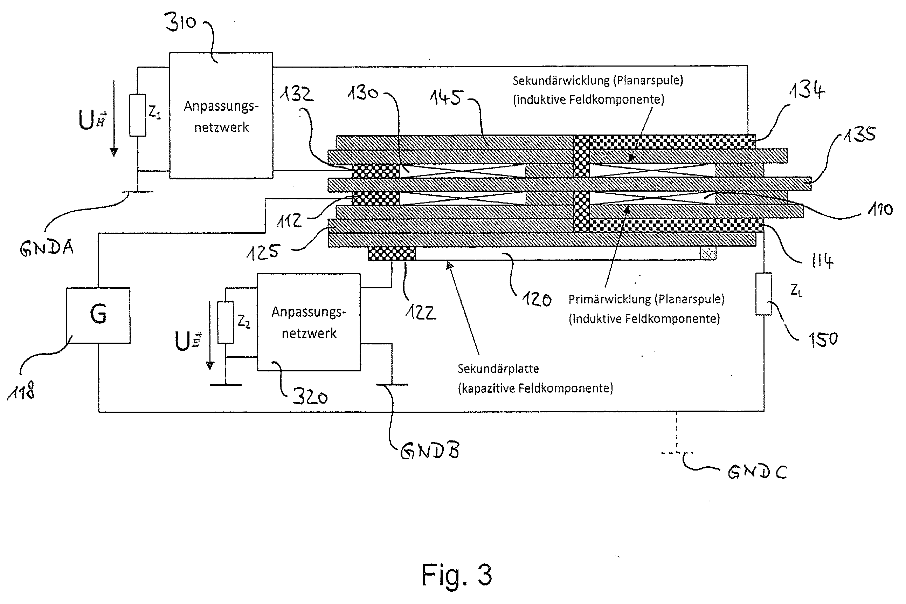

Der Strompfadausgang 114 und der dritte Messsignalanschluss 134 koppeln beispielsweise an einer (radialen) Innenseite der ersten und zweiten Planarspule an, wobei Zuleitungen beispielsweise durch eine der dielektrischen Schichten gelegt werden können (z.B. durch das zweite Dielektrikum 135). Eine alternative Möglichkeit wird in der Fig. 3 gezeigt.

Die in der Querschnittsansicht der Figuren gezeigte erste und zweite Planarspule stellen elektrisch leitende Windungen/Wicklungen dar, die der Einfachheit halber nicht einzeln dargestellt sind, es ist lediglich der durch die Wicklungen eingenommene Querschnittsraum dargestellt (gekreuzte Flächen).

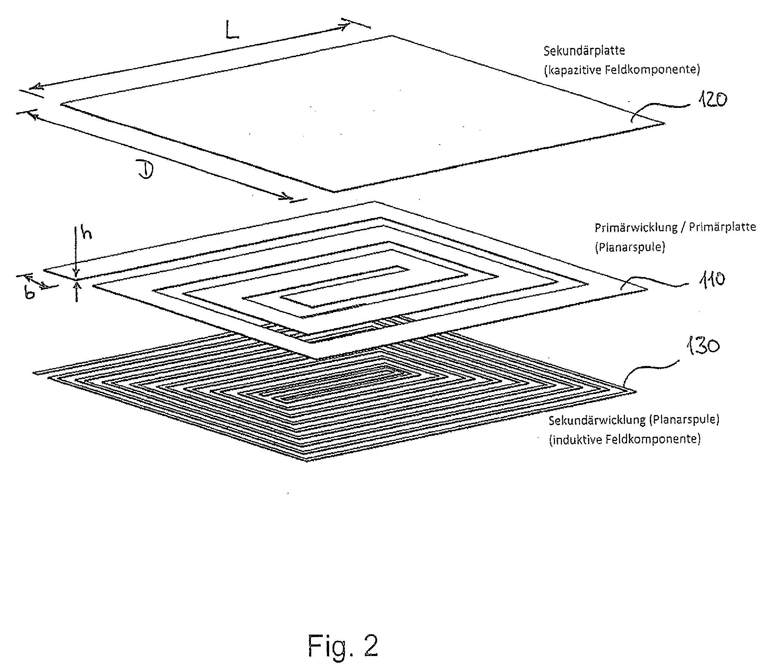

Fig. 2 zeigt eine Raumansicht der einzelnen Planarelektroden, wobei die erste Planarelektrode 110 zwischen der zweiten Planarelektrode 120 und dem Induktionselement 130 angeordnet ist. Bei der in der Fig. 2 gezeigten Raumansicht ist das Induktionselement 130 unten angeordnet, während dessen die zweite Planarelektrode 120 oben angeordnet ist (im Gegensatz zu dem in der Fig. 1 gezeigten Ausführungsbeispiel). Die zweite Planarelektrode 120 stellt dabei beispielsweise eine Sekundärplatte dar, die eine kapazitive Feldkomponente erfasst und beispielsweise als eine Kondensatorplatte ausgebildet ist. Die erste Planarelektrode 110 ist als Planarspule ausgebildet und stellt die Primärwicklung (Primärplatte) dar, da über die erste Planarelektrode 110 das primär zu messende Messsignal geleitet wird, wobei der Strompfadeingang beispielsweise am äußeren Spulenende ausgebildet ist und der Strompfadausgang am inneren Spulenende angeordnet ist. Bei weiteren Ausführungsbeispielen kann selbstverständlich auch der Strompfadeingang mit dem Strompfadausgang ausgetauscht werden, so dass das zu messende Messsignal an der Innenseite der Spulen angekoppelt wird und entsprechend an der äußeren Spulenseite angenommen wird. Aus der der Fig. 2 ist ersichtlich, dass die erste Planarelektrode 110 flächig ausgebildet ist, so dass zwischen der zweiten Planarelektrode 120 und der ersten Planarelektrode 110 eine möglichst große kapazitive Kopplung herstellbar ist. Dies kann beispielsweise dadurch erreicht werden, dass der Querschnitt der ersten Planarelektrode 110 rechteckförmig (oder auch oval) ist, wobei die längere Rechteckseite parallel zur planaren Ausrichtung der zweiten Planarelektrode 120 (Sekundärplatte) ausgerichtet ist.

Das Induktionselement 130 ist in der Fig. 2 unterhalb der ersten Planarelektrode 110 angeordnet und ist wiederum in Form einer Planarspule (als Sekundärwicklung) ausgebildet. Mittels dem Induktionselement (Sekundärwicklung) ist somit eine induktive Feldkomponente abgreifbar, die dadurch entsteht, dass, wenn ein zu messendes Signal durch die erste Planarelektrode 110 geleitet wird, infolge der Induktion ein induktives Messsignal in dem Induktionselement 130 erzeugt wird. Das induzierte Messsignal kann dadurch beeinflusst werden, dass die Wicklungszahl des Induktionselementes 130 (Sekundärwicklung) entsprechend gewählt wird. Um beispielsweise eine kapazitive Kopplung zwischen der ersten Planarelektrode 110 und dem Induktionselement 130 (oder zwischen der zweiten Planarelektrode 120 und dem Induktionselement 130) möglichst zu unterdrücken, wird optional das Induktionselement 130 mit einem Querschnitt ausgebildet, der - entgegen der ersten Planarelektrode 110 - eine verringerte gemeinsame Fläche zur ersten Planarelektrode 110 aufweist. Beispielsweise kann das Induktionselement 130 in Form von Drähten (z.B. in quadratischer oder runder Form) ausgebildet sein, so dass im Wesentlichen nur eine induktive Kopplung zwischen der ersten Planarelektrode 110 und dem Induktionselement 130 besteht und eine etwaig vorhandene kapazitive Kopplung möglichst weit unterdrückt wird.

Das beschriebene Grundprinzip kann dabei beispielsweise über folgende mögliche Geometrien erreicht werden. Je nach Frequenzbereich können zunächst die Windungszahl und die Gesamtgeometrie abweichen. Bei der Primärwicklung (Planarspule) des induktiven Sensorteils, wie sie durch die erste Planarelektrode 110 bereitgestellt wird, kann die Windungszahl beispielsweise 8 betragen (andere mögliche Werte sind 6, 7, 9, 10, 20 oder weniger als 10), und der Leiterbahnquerschnitt kann beispielsweise 35 µm in der Höhe h und 0,5 mm in der Breite *b* betragen, wobei die Querschnitte sich auf jede Wicklung beziehen. Diese Werte können jedoch entsprechend der Stromdichte variiert werden, da über die erste Planarelektrode 110 der Hauptstrom des beispielhaften Piezo-Motors fließt, der ebenfalls die Primärwicklungen passieren muss. Die Querschnittsfläche *b* x *h* (senkrecht zur Stromrichtung) wird beispielsweise basierend auf der Stromdichte fixiert und kann beispielsweise fixiert bleiben, während die Breite *b* und Höhe *h* relative zueinander variiert werden, um die kapazitive und induktive Kopplung zu optimieren. Beispielsweise kann die kapazitive Kopplung zwischen dieser Primärwicklung und der Sekundärplatte (zweiten Planarelektrode 120) verbessern werden, in dem die Leiterbahnbreite *b* vergrößert wird. Die Gesamtgeometrie der ersten Planarelektrode 110 kann beispielsweise 25 mm in der Länge *L* und 15 mm in der Breite *D* betragen. Das Induktionselement 130 stellt die Sekundärwicklung dar, die ebenfalls als eine Planarspule ausgebildet ist und Teil des induktiven Sensorteils ist. Die Windungszahl des Induktionselementes 130 ist beispielsweise 15 (andere Werte sind beispielsweise 10, 11, 12, 20, 25 oder 30 öder auch mehr als 10), wobei der Leiterbahnquerschnitt des Induktionselementes 130 beispielsweise 35 µm (Höhe *h*) beträgt und 0,1 mm in der Breite *b* beträgt (Höhe *h* und Breite *b* werden beispielsweise genauso gemessen wie bei der ersten Planarelektrode 110), wobei diese Werte sich auf jede Wicklung beziehen. Da die Stromdichte in dem Induktionselement 130 beispielsweise geringer ist als in der Primärwicklung 110, kann die Leiterbahn der Sekundärwicklung beispielsweise geringere Dimensionen haben, z.B. eine geringere Schichtdicke h oder Breite *b* aufweisen. Die Gesamtgeometrie kann beispielsweise wiederum der Gesamtgeometrie der Primärwicklung (erste Planarelektrode 110) entsprechen, so dass auch hier ebenfalls eine Gesamtlänge *L* von 25 mm möglich ist und eine Gesamtbreite D von 15 mm (d.h. die als Planarspule gewickelte Induktionselement 130 weist eine Fläche von 25 mm x 15 mm auf), kann aber auch größer oder kleiner als die erste Planarelektrode 110 gewählt werden.

Die zweite Planarelektrode 120 stellt die Sekundärplatte dar und bildet zusammen mit der ersten Planarelektrode 110, die als Primärplatte wirkt, den kapazitiven Sensorteil (d.h. die erste Planarelektrode 110 ist sowohl Teil des kapazitiven als auch des induktiven Sensorteils). Die Schichtdicke h beträgt beispielsweise 35 µm. Da die Stromdichte der Sekundärplatte ebenfalls geringer ist als die Stromdichte der ersten Planarelektrode 110, kann die Leiterbahnfläche oder -dicke auch geringer gewählt sein (d.h. eine geringere Schichtdicke als 35 µm aufweisen). Die Gesamtgeometrie kann beispielsweise gleich zur Gesamtgeometrie der Primärwicklung/-platte bzw. der Sekundärwicklung des induktiven Sensorteils gewählt sein, so dass auch bei dem kapazitiven Sensorteil eine Länge *L* von beispielsweise 25 mm und eine Breite B von 15 mm möglich ist.

Die Länge *L* kann beispielsweise auch weniger als 25 mm oder mehr als 25 mm sein, die Gesamtbreite *D* kann beispielsweise auch weniger als 15 mm oder mehr als 15 mm sein. Ebenso kann die Höhe h auch weniger oder mehr als 35 µm und die Breite *b* kann auch mehr oder weniger als 0,5 mm oder mehr oder weniger als 1 mm betragen. Als Material für die Sekundärplatte kann beispielsweise Kupfer genutzt werden.

Fig. 3 zeigt eine Seitenansicht eines Multilayerprints, bei dem die erste Planarelektrode 110 zwischen der zweiten Planarelektrode 120 und dem Induktionselement 130 angeordnet ist, wobei zwischen der ersten Planarelektrode 110 und der zweiten Planarelektrode 120 ein erstes Dielektrikum 125 ausgebildet ist. Bei dem in der Fig. 3 gezeigten Ausführungsbeispiel ist das erste Dielektrikum 125 durch mehrere dielektrische Schichten ausgebildet, wobei eine der Schichten einen als leitfähige Schicht ausgebildeten Strompfadausgang 114 aufweist, der einen Spuleninnenteil der ersten Planarelektrode 110 kontaktiert. Zwischen der ersten Planarelektrode 110 und dem Induktionselement 130 ist wiederum ein zweites Dielektrikum 135 ausgebildet. Oberhalb des Induktionselementes 130 ist bei dem in der Fig. 3 gezeigten Ausführungsbeispiel ein weiteres Dielektrikum 145 ausgebildet, welches ebenfalls optional mehrere Schichten umfassen kann. Das Induktionselement 130 ist als zweite Planarspule ausgebildet und wird durch den zweiten Messsignalanschluss 132 an einer Spulenaußenseite kontaktiert und durch den dritten Messsignalanschluss 134 an einer Spuleninnenseite kontaktiert. Der dritte Messsignalanschluss 134 ist (wie auch der Strompfadausgang 114) als eine leitfähige Schicht ausgebildet, die zunächst parallel zu dem Induktionselement 130 verläuft und dann in das Spuleninnenteil hineingeführt ist.

Die einzelnen dielektrischen Schichten und die Planarelektroden können beispielsweise als (geprintete) Leiterbahnen ausgebildet sein, wobei für die Planarelektroden elektrisch leitfähiges Material wie beispielsweise Kupfer und für die Dielektrika elektrisches Isoliermaterial wie beispielsweise Printplatten (Leiterplattenmaterial), Kunststoffe oder Keramik genutzt werden. Der Strompfadeingang 112 ist mit einem Generator 118 (z.B. Schwingungsgenerator oder Versorgungseinheit) verbunden, der wiederum mit einer Last 150 (z.B. einen Piezo-Motor) elektrisch verbunden ist, die zwischen dem Strompfadausgang 114 und dem Generator 118 seriell geschaltet ist. Die Last weist beispielsweise eine Impedanz *Z_{L}* auf. Zwischen dem zweiten Messsignalanschluss 132 und dem dritten Messsignalanschluss 134 ist ein erstes Anpassungsnetzwerk 310 geschaltet, welches als induktives Messsignal eine Spannung *U_{H}* misst, indem über eine erste Impedanz *Z_{I}* ein Spannungsabfall gemessen wird (beispielsweise bezüglich eines ersten Referenzpotentials *GNDA*, das auf einer Seite der Impedanz anliegt), wobei das induktive Messsignal von dem in dem Induktionselement 130 induzierten Größe (Strom/Spannung) abhängt. Der erste Messsignalausgang 122 ist an ein zweites Anpassungsnetzwerk 320 gekoppelt, welches eine Impedanz Z₂ aufweist und an ein zweites Referenzpotential *GNDB* gekoppelt ist. Das zweite Anpassungsnetzwerk 320 liefert als kapazitives Messsignal ein Spannungssignal *U_{E}* (z.B. bzgl. des zweiten Referenzpotentials *GNDA*). Das erste Anpassungsnetzwerk 310 und das zweite Anpassungsnetzwerk 320 können beispielsweise Verstärker und/oder Filter und/oder Analog-Digital-Wandler aufweisen, die genutzt werden, um die gemessenen Signale entsprechend aufzubereiten oder zu verstärken oder zu filtern, um sie dann in ein Steuersignal umzuwandeln, mit deren Hilfe das elektrische Versorgungssignal beeinflusst wird.

Die elektrische Verbindung zwischen dem Generator 118 und der Last 150 kann beispielsweise auf ein drittes Referenzpotential *GNDC* gelegt werden, welches dem ersten oder zweiten Referenzpotential *GNDA*, *GNDC* entspricht, jedoch optional auch unterschiedlich gewählt sein kann. Die unterschiedliche Wahl der Bezugspotentiale (*GNDA*, *GNDB*, *GNDC*) kann dabei einer galvanischen Trennung der einzelnen Bauelemente bzw. der Auswerteschaltungen dienen.

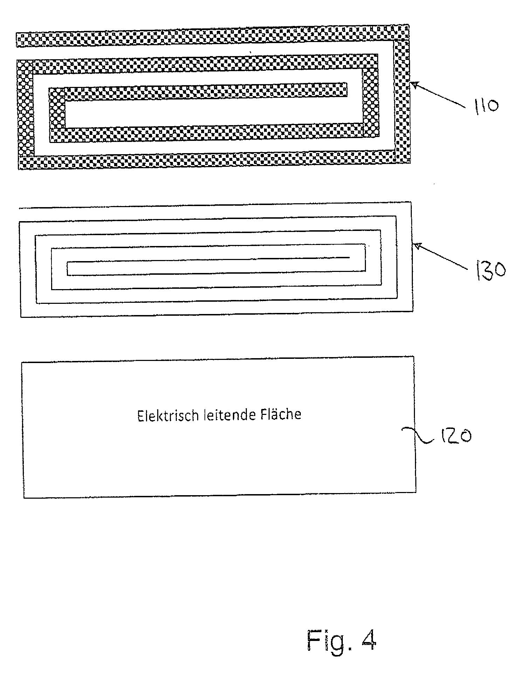

Die Fig. 4 zeigt eine Aufsicht auf die Primär- und Sekundärwicklungen (der Planarspulen) und auf die Sekundärplatte. Zunächst ist oben die Primärwicklung gezeigt, die durch die erste Planarelektrode 110 gegeben ist. Diese Planarelektrode ist flächig ausgebildet und stellt eine elektrisch leitende Zone dar, und kann beispielsweise durch eine gedruckte Kupferleitung definiert werden. Die flächige Ausgestaltung der ersten Planarelektroden 110 dient einerseits der kapazitiven Kopplung zur Sekundärplatte (zweite Planarelektrode 120) und gleichzeitig über die ausgebildeten Wicklungen der induktiven Kopplung (induktive Feldkomponente) zu dem Induktionselement 130.

In der Mitte ist in der Fig. 4 die Sekundärwicklung gezeigt, die eine induktive Kopplung an die Primärwicklung liefert, um eine magnetische Feldkomponente erfassen zu können. Die Sekundärwicklung (Induktionselement 130) ist beispielsweise über dünne elektrische Zonen gebildet, die beispielsweise ebenfalls gedruckte Kupferleitungen umfassen können. Im Vergleich zur Primärwicklung ist jedoch die in der Draufsicht gezeigte Fläche der Sekundärwicklung deutlich kleiner als bei der Primärwicklung, d.h. die entsprechenden Kupferleitungen sind dünner ausgebildet, bzw. die Primärwicklung umfasst mehrere parallel laufende Kupferleitungen, um die Fläche in den planaren Richtungen zu erhöhen. Die dünnen elektrisch leitenden Zonen der Sekundärwicklung (Induktionselement 130) sind beispielsweise derart gewählt, dass nahezu keine kapazitive Feldkomponente erhalten wird. Dadurch soll in Bezug auf die flächige Primärwicklung (erste Planarelektrode 110) möglichst nur die magnetische Feldkomponente erfasst werden. Die Spulenform der Primär- und Sekundärwicklungen, wie sie in der Fig. 4 gezeigt sind, können optional kreisförmig, elliptisch, rechteckformig, quadratisch oder andere Formen aufweisen und sollen lediglich sicherstellen, dass eine möglichst optimale induktive Kopplung zwischen der Primärwicklung und der Sekundärwicklung erreicht wird.

In der Fig. 4 unten dargestellt ist die Sekundärplatte, die der kapazitiven Kopplung zwischen der ersten Planarelektrode 110 und der zweiten Planarelektrode 120 dient, um die elektrische Feldkomponente zu erhalten. Die Sekundärplatte, wie sie in der Fig. 4 unten dargestellt ist, kann beispielsweise eine elektrisch leitende Fläche sein und beispielsweise durch bedruckte Kupferleitungen definiert sein. Da die Primärwicklung flächig ausgestaltet wurde, wird nahezu nur die kapazitive Feldkomponente bezüglich der Sekundärplatte erfasst.

Ein Vorteil dieser Gesamtanordnung ist, dass elektrische und magnetische Felder gleichzeitig erfasst werden können. Dadurch ist es möglich, je nach Lastimpedanz, eine Phasenverschiebung festzustellen. Optional kann ebenfalls eine Stromamplitude und/oder Spannungsamplitude und/oder Frequenz gleichzeitig erfasst werden.

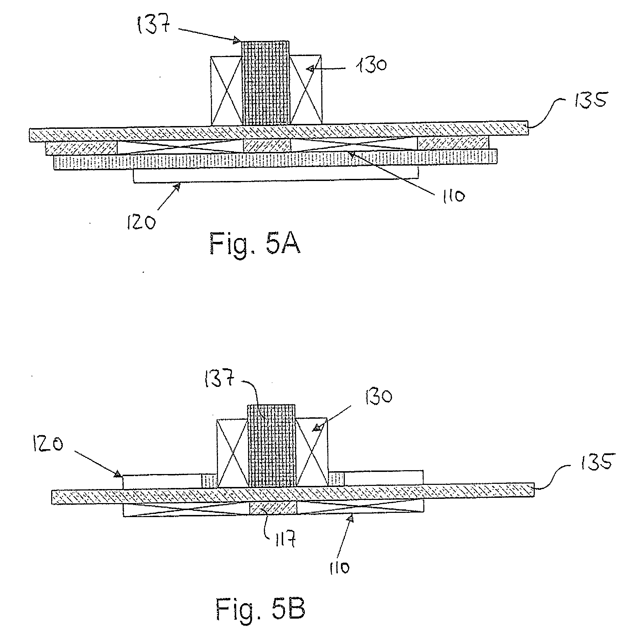

Fig. 5A und 5B zeigen Seitenansichten weiterer Ausführungsbeispiele, bei denen das Induktionselement 130 nicht als Planarspule ausgebildet ist, sondern als übliche Spule, die auch in senkrechter Richtung zur planaren Ebene gewickelt ist (Wicklungen befinden sich nicht nur in einer gemeinsamen Ebene). Die planare Ebene ist durch die Länge *L* und Breite *D* in Fig. 2 gegeben.

Fig. 5A zeigt ein Ausführungsbeispiel, bei dem das Induktionselement 130 als Spule um einen weichmagnetischen Spulenkern 137 gewickelt ist, und zwar derart, dass die laterale Ausdehnung des Induktionselementes 130 kleiner ist als die laterale Ausdehnung der ersten Planarelektrode 110, die von dem Induktionselement 130 durch das zweite Dielektrikum 135 getrennt ist. Die Sekundärplatte 120 (zweite Planarelektrode) dient wiederum der Bereitstellung der kapazitiven Feldkomponente zur ersten Planarelektrode 110 und weist in dem in der Fig. 5A gezeigten Ausführungsbeispiel eine kleinere Fläche auf als jene Fläche, die von der ersten Planarelektrode 110 eingenommen wird, wobei die Flächen sich auf die planare Ausdehnung beziehen. Die erste Planarelektrode 110 dient wiederum als Primärwicklung (da sie als Planarspule ausgebildet ist), um die induktive Feldkomponente zu dem Induktionselement 130 zu erzeugen. Die Dielektrika, die zwischen dem Induktionselement 130 und der ersten Planarelektrode 110 und zwischen der zweiten Planarelektrode 120 und der ersten Planarelektrode 110 genutzt werden, können beispielsweise gleiche oder unterschiedliche elektrische Isoliermaterialien umfassen, währenddessen der Spulenkern 137 des Induktionselementes 130 beispielsweise ein weichmagnetisches Kernmaterial umfassen kann, wie beispielsweise Ferrite.

Das in der Fig. 5B gezeigte Ausführungsbeispiel unterscheidet sich von dem in der Fig. 5A gezeigten Ausführungsbeispiel dadurch, dass die Sekundärplatte 120 lateral neben dem Induktionselement 130 angeordnet ist, und zwar auf der gleichen Seite der dielektrischen Schicht 135 wie das Induktionselement 130. Somit ist auf der gemeinsamen dielektrischen Schicht 135 auf der einen Seite nur die erste Planarelektrode 110 (Primärwicklung, Planarspule) angeordnet und auf der gegenüberliegenden Seite sowohl die zweite Planarelektrode 120 als auch das Induktionselement 130 (z.B. als Spule gewickelt) angeordnet. Bei dem in der Fig. 5B gezeigten Ausführungsbeispiel ist wiederum im Spulenkern des Induktionselementes 130 ein weichmagnetisches Material 137 ausgebildet. Die Sekundärplatte (zweite Planarelektrode 120) kann beispielsweise als eine Ringfläche um das Induktionselement 130 angeordnet werden, wodurch einerseits eine möglichst große kapazitive Kopplung zwischen der zweiten Planarelektrode 120 und der ersten Planarelektrode 110 erreicht wird und andererseits eine möglichst hohe induktive Kopplung der ersten Planarelektrode 110 zu dem Induktionselement 130 sichergestellt ist und/oder eine Verkleinerung der Geometrie der Spule und/oder eine Anpassung der Frequenzbereiche ermöglicht wird.

Optional kann der erste Spulenkern 117 der ersten Planarelektrode 110 ebenfalls weichmagnetisches oder dielektrisches Material aufweisen.

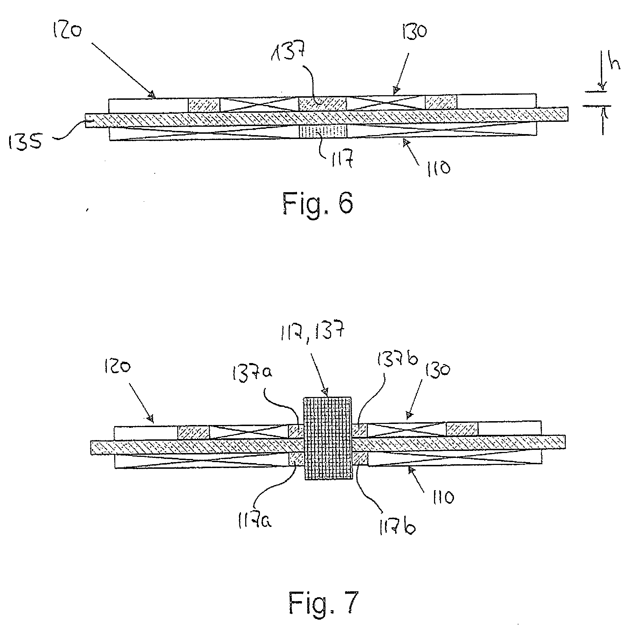

Die Fig. 6 zeigt ein weiteres Ausführungsbeispiel, bei dem die zweite Planarelektrode 120 und das Induktionselement 130 lateral nebeneinander auf einer gemeinsamen Seite der dielektrischen Schicht 135 angeordnet sind. Bei dem in der Fig. 6 gezeigten Ausführungsbeispiel ist jedoch das Induktionselement 130 lediglich mit der gleichen Höhe h ausgebildet wie die zweite Planarelektrode 120. Ebenso ist bei dem in der Fig. 6 gezeigten Ausführungsbeispiel der Spulenkern 137 in dem Induktionselement 130 aus keinem weichmagnetischem Material ausgebildet (sondern z.B. aus Isoliermaterial). Die erste Planarelektrode 110 ist wiederum auf der gegenüberliegenden Seite der dielektrischen Schicht 135 angeordnet, wobei die laterale Ausdehnung der ersten Planarelektrode 110 mit der gemeinsamen lateralen Ausdehnung der zweiten Planarelektroden 120 und des Induktionselementes 130 beispielsweise übereinstimmt. Das in der Fig. 6 gezeigte Ausführungsbeispiel weist damit eine sehr geringe Bauhöhe auf und kann somit leicht an verschiedenen Stellen der Behandlungsvorrichtung integriert werden.

Das in der Fig. 7 gezeigte Ausführungsbeispiel unterscheidet sich von dem in der Fig. 6 gezeigten Ausführungsbeispiel dadurch, dass ein gemeinsamer magnetischer Spulenkern 137, 117 in der ersten Planarelektrode 110 und dem Induktionselement 130 ausgebildet ist, so dass die Primärwicklung und die Sekundärwicklung einen gemeinsamen Spulenkern aufweisen, der der besseren magnetischen Kopplung zwischen beiden Planarspulen dient. Wie auch bei dem in Fig. 6 gezeigten Ausführungsbeispiel ist die zweite Planarelektrode 120 vom gemeinsamen Spulenkern 117, 137 aus gesehen außerhalb des Induktionselementes 130 angeordnet (beispielsweise in Form eines Kreisringes, Ovals, Rechteckes, Quadrats um das Induktionselement angeordnet). Optional ist es möglich, dass zwischen dem Spulenkern 137, 117 und den Wicklungen der ersten Planarelektrode 110 und des Induktionselementes 130 weiteres dielektrisches Material 137a, b und 117a, b ausgebildet ist. Der weichmagnetische Spulenkern 117, 137 kann im Träger (Print) eingeschraubt werden. Dadurch wird die Kopplung zwischen der Primär- und Sekundärwicklung verbessert. Ein weiterer Vorteil dieser Ausführungsform (wie auch von der in der Fig. 6 gezeigten) besteht in der vereinfachten Kontaktierung, da die Spuleninnenseiten zugänglich sind und der Strompfadausgang 114 und die dritte Messsignalanschluss 134 leicht ausgebildet werden können, ohne andere Komponenten zu behindern.

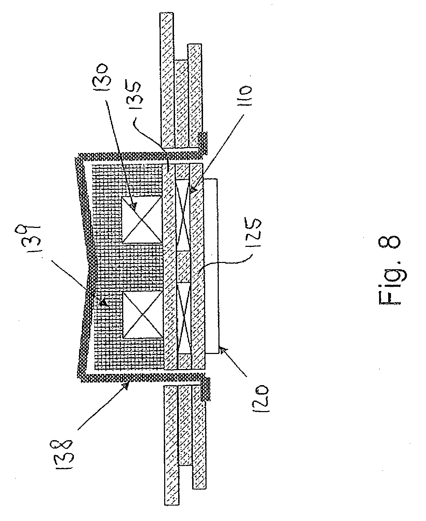

Fig. 8 zeigt ein weiteres Ausführungsbeispiel, bei dem das Induktionselement 130 in eine Ummantelung 139 (z.B. aus weichmagnetischem Material) eingebettet ist. Wie zuvor auch ist zwischen der ersten Planarelektrode 110, die wiederum die Primärwicklung für die induktive Feldkomponente darstellt, und der zweiten Planarelektrode 120 (für die kapazitive Feldkomponente) ein erstes Dielektrikum 125 ausgebildet und zwischen der ersten Planarelektrode 110 und dem Induktionselement 130 ein zweites Dielektrikum 135 ausgebildet. Die dielektrischen Schichten können beispielsweise wiederum Leiterplatten sein. Die Ummantelung 139 kann beispielsweise alle Seiten des Induktionselementes 130 umfassen, mit Ausnahme der Richtung zu der ersten Planarelektrode 110. Optional kann ein Montagebügel 138 die Ummantelung 139 halten. Beispielsweise kann in den dielektrischen Schichten (die z.B. durch Leiterplatten gegeben sind) eine Öffnung ausgebildet sein, durch die sich der Montagebügel 138 erstreckt, so dass die Ummantelung 139 fest mit der darunterliegenden Schichtstruktur (dielektrische Schichten und erste und zweite Planarelektrode) verbunden werden kann. Bei dem in der Fig. 8 gezeigten Ausführungsbeispiel ist das Induktionselement 130 mit einer quadratischen Querschnittsfläche ausgebildet, um die sich die Ummantelung 139 erstreckt.

Ein Vorteil der Nutzung von weichmagnetischem Material für die Ummantelung 139 ist, dass dadurch die induktive Kopplung zwischen der Primär- und Sekundärwicklung verbessert wird. Außerdem kann durch den Montagebügel 138 ein fester Halt mit dem Print (Träger) erreicht werden. Vorteilhaft ist weiter, dass ein verbesserter EMV-Schutz (EMV, Elektro-Magnetische Verträglichkeit) bei dem hier gezeigten Ausführungsbeispiel erreicht wird.

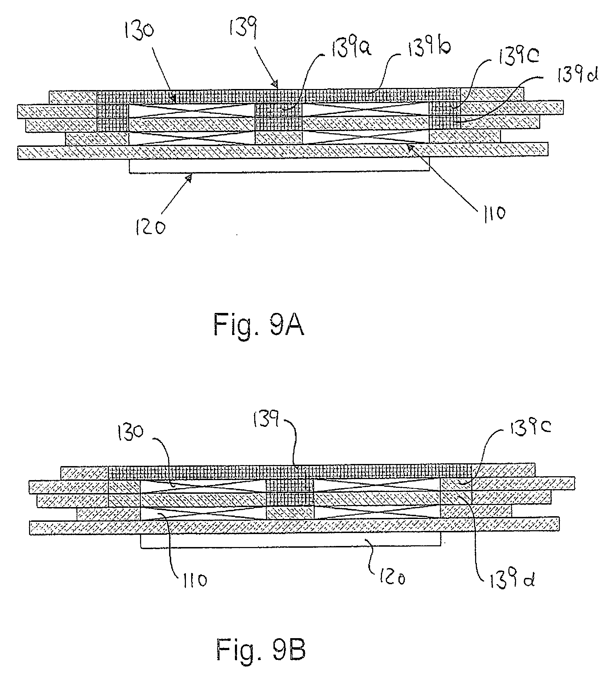

Fig. 9A, B zeigen weitere Ausführungsbeispiele, bei dem die Ummantelung 139 in einem Multilayerprint durch die Nutzung von Ferritmaterial erreicht wird. Das genutzte Ferritmaterial umfasst ebenfall den Spulenkern 139a des als Spule ausgebildeten Induktionselementes 130 und ist als Ferritschicht 139b entlang der Oberseite ausgebildet.

In der Fig. 9A sind weitere weichmagnetische Element 139c, d an der äußeren Peripherie ausgebildet (d.h. lateral seitlich neben dem Induktionselement 130). Somit ist das Induktionselement 130 sowohl oben (durch die Schicht 139b) als auch seitlich durch die Schichten 139c, d mittels weichmagnetischen Material umgeben. Die restlichen Komponente des in der Fig. 9A gezeigten Ausführungsbeispiels unterscheiden sich nicht von dem in der Fig. 8 gezeigten Ausführungsbeispiel, so dass auf eine wiederholte Beschreibung hier verzichtet werden kann. Bei dem in der Fig. 9B gezeigten Ausführungsbeispiel sind die seitlichen Elemente 139c und 139d nicht aus Ferritmaterial, sondern beispielsweise aus einem dielektrischen Material gebildet. Alle weiteren Komponente der in der Fig. 9B gezeigten Ausführungsform stimmen mit den zuvor beschriebenen Teilen überein.

Ein Vorteil der zumindest teilweisen Einbettung der Sekundärwicklung 130 in weichmagnetischem Material (wie z.B. Ferrite) ist ein erhöhter EMV-Schutz. Außerdem wird eine weitere Integration der Komponenten und somit eine erhöhte Robustheit erreicht. Optional können die Ferritsegmente auch aus verschieden Ferrittypen bestehen, um das gewünschte Frequenzverhalten zu erhalten oder unerwünscht EMV Effekte zu vermeiden.

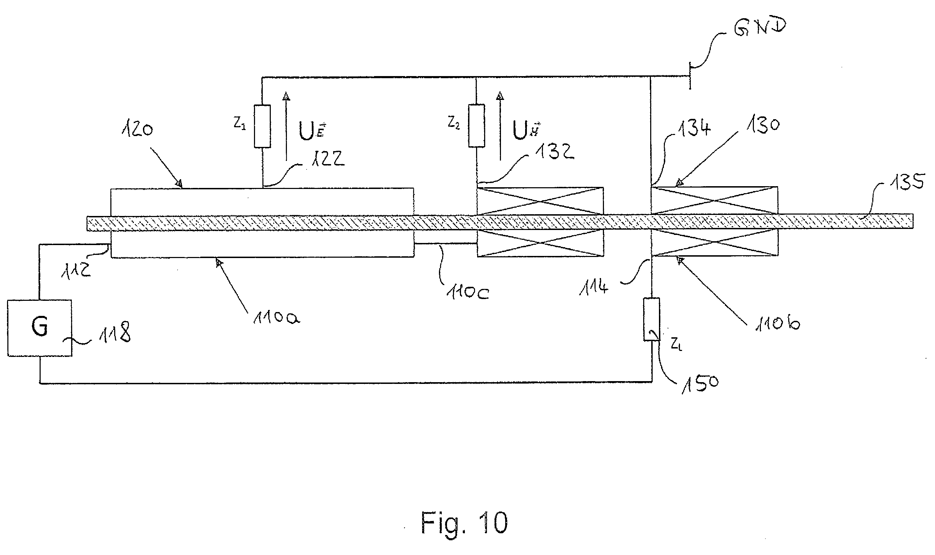

Die Fig. 10 zeigt ein Ausführungsbeispiel, bei dem wiederum alle Elemente entlang einer gemeinsamen dielektrischen Schicht 135 ausgebildet sind. Außerdem weist die erste Planarelektrode 110 einen ersten Teil 110a und einen zweiten Teil 110b auf. Auf der einen Seite der gemeinsamen dielektrischen Schicht 135 sind die zweite Planarelektrode 120 und das Induktionselement 130 lateral voneinander separiert angeordnet. Der erste Teil 110a ist als Primärplatte ausgebildet und gegenüberliegend der zweiten Planarelektrode 120 auf der anderen Seite der gemeinsamen dielektrischen Schicht 135 angeordnet. Der zweite Teil 110b ist elektrisch mit dem ersten Teil 110a verbunden, jedoch lateral dazu versetzt auf der gleichen Seite der gemeinsamen dielektrischen Schicht 135 angeordnet, und zwar gegenüberliegende dem Induktionselementes 130, so dass eine induktive Feldkomponente durch das Induktionselement 130 ausgelesen werden kann.

Zwischen dem ersten Messsignalanschluss 122 an der zweiten Planarelektrode 120 und einem Referenzpotential GND kann eine erste Impedanz *Z₁* geschaltet sein, wobei die kapazitive Messgröße *U_{E}* beispielsweise als Potentialabfall über die erste Impedanz ermittelbar ist. Die induktive Feldkomponente kann beispielsweise mittels einer zweiten Impedanz *Z₂* ermittelt werden (z.B. auch als Potentialabfall *U_{H}*), die seriell zwischen dem zweiten und dem dritten Messsignalanschluss 132, 134 ausgebildet ist (optional ist der zweite oder dritte Messsignalanschluss 132, 134 ebenfalls auf das Referenzpotential GND gelegt). Der Strompfadeingang 112 ist an dem ersten Teil 110a und der Strompfadausgang an dem zweiten Teil 110b ausgebildet, wobei zwischen Strompfadeingang 112 und dem Strompfadausgang 114 zunächst ein Generator 118 und eine Lastimpedanz *Z_{L}* (Last 150) in Reihe geschaltet sind. Die Last 150 kann beispielsweise ein Piezo-Element der Behandlungsvorrichtung umfassen.

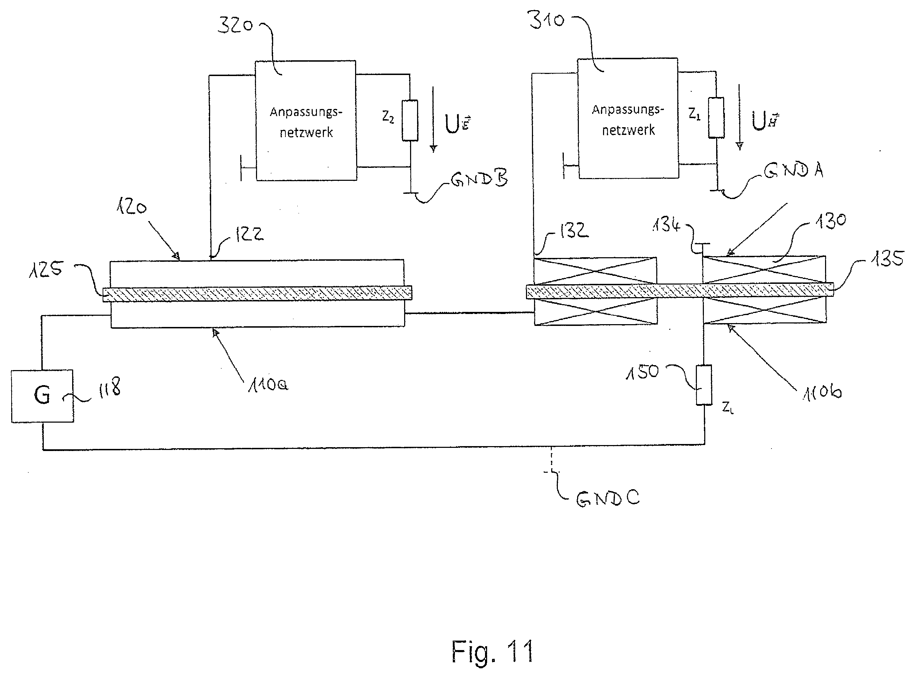

Bei dem in der Fig. 11 gezeigten Ausführungsbeispiel ist keine gemeinsame dielektrische Schicht ausgebildet, wobei die erste Planarelektrode 110 wiederum einen ersten Teil 110a und einen zweiten Teil 110b aufweist, die über eine elektrische Verbindung 110c miteinander elektrisch verbunden sind.

Der kapazitive Sensoranteil ist somit durch den ersten Teil 110a der ersten Planarelektrode 110 und der zweiten Planarelektrode 120 gegeben, die auf gegenüberliegenden Seiten des ersten Dielektrikums 125 angeordnet sind. Der induktive Sensorteil ist durch den zweiten Teil 110b und dem Induktionselementes 130 gegeben, die gegenüberliegend auf verschiedenen Seiten des zweiten Dielektrikums 135 angeordnet sind.

Die elektrische Verbindung 110c zwischen dem zweiten Teil 110b und dem ersten Teil 110a der ersten Planarelektrode 110 kann beispielsweise so ausgebildet sein, dass der kapazitive Sensorteil in einem anderen Bauelement angeordnet ist als der induktive Sensorteil. Dementsprechend kann auch die Messwerterfassung getrennt voneinander durchgerührt werden. Am zweiten Messsignalanschluss 132 des Induktionselementes 130 kann das erstes Anpassungsnetzwerk 310 ausgebildet sein (siehe auch Fig. 3), welches relativ zu einem erstes Bezugspotential *GNDA* geschaltet ist und über eine erste Impedanz *Z₁* beispielsweise einen Spannungsabfall *U_{H}* entsprechend zu einer magnetischen Feldkomponente misst. Der zweite Messsignalanschluss 134 liegt ebenfalls auf einem Referenzpotential, welches optional mit dem ersten Bezugspotential *GNDA* übereinstimmt. Zur kapazitiven Messung ist wiederum am ersten Messsignalausgang 122 das zweites Anpassungsnetzwerk 320 gekoppelt, welches beispielsweise einen Spannungsabfall über eine zweite Impedanz *Z₂* misst und daraus beispielsweise die elektrische Feldstärke erfasst. Zwischen dem Strompfadeingang 112 und dem Strompfadausgang 114 ist wie in Fig. 11 auch eine Generator 118 und eine Lastimpedanz *Z_{L}* geschaltet, wobei der Knoten dazwischen auf dem dritten Referenzpotential *GNDC* liegt, so dass eine galvanische Trennung erreicht wird. Optional können die Referenzpotentiale übereinstimmt oder auch unterschiedlich gewählt sein kann.

Der kapazitive Sensorteil und der induktive Sensorteil sind bei diesem Ausführungsbeispiel raumartig voneinander getrennt angeordnet. Beispielsweise kann einer der beiden Sensorteile in dem Handstück der Behandlungsvorrichtung oder der Verbindungsleitung ausgebildet sein, währenddessen der andere der beiden Sensorteile entsprechend entweder in der Verbindungsleitung oder in der Versorgungseinheit angeordnet ist. Ausführungsbeispiele umfassen somit die folgenden Möglichkeiten. Das kapazitive Sensorteil ist in dem Handstück ausgebildet, während das induktive Sensorteil in der Verbindungsleitung oder in der Versorgungseinheit ausgebildet ist. Bei einer weiteren Ausführungsform ist das kapazitive Sensorteil in der Verbindungsleitung ausgebildet, während das induktive Sensorteil in dem Handstück oder in der Versorgungseinheit ausgebildet ist. Bei einer weiteren Ausführungsform ist das kapazitive Sensorteil in der Versorgungseinheit ausgebildet, während das induktive Sensorteil in dem Handstück oder in der Verbindungsleitung ausgebildet ist. Außerdem können bei weiteren Ausführungsbeispielen das kapazitive und induktive Sensorteil auch zusammen in dem Handstück oder zusammen in der Versorgungseinheit oder zusammen in der Verbindungsleitung ausgebildet sein.

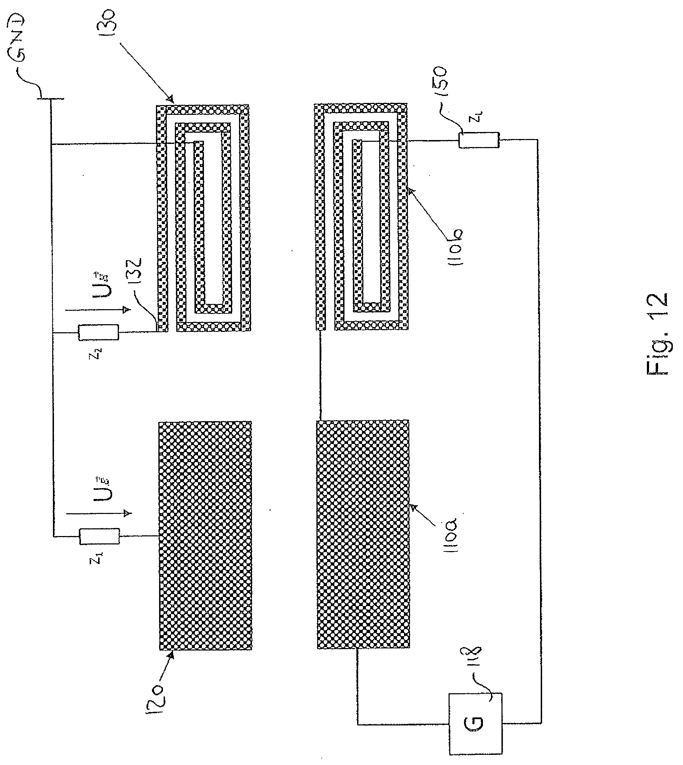

Die Fig. 12 zeigt Draufsichten auf die Sekundärseite (als top-layer) und auf die Primärseite (als bottom-layer). Auf der Sekundärseite (Oberseite) sind die Sekundärplatte 120 und daneben die Sekundärwicklung (das Induktionselement 130) dargestellt. Auf der Primärseite (Unterseite) sind die Primärplatte 110a gezeigt, die durch den ersten Teil 110a der ersten Planarelektrode 110 gegeben ist, und daneben ist als Primärwicklung der zweite Teil 110b der Planarelektrode 110 gezeigt. Der kapazitive Sensor ist durch die Sekundärplatte 120 und die Primärplatte 110a gegeben und der induktive Sensor durch den Primärwicklung 110b und die Sekundärwicklung 130. Die Last ist bei dem in der Fig. 12 gezeigten Ausführungsbeispiel zwischen dem Strompfadausgang 114 der Primärwicklung 110 und dem Generator 118 geschaltet, wobei der Generator 118 andererseits wiederum an die Primärplatte 114a elektrisch gekoppelt ist. Die beiden Messsignale werden relativ zu einem gemeinsamen Referenzpotential *GND* gemessen (wie in der Fig. 10), wobei die elektrische Komponente über eine Impedanz *Z₁* zwischen der Sekundärplatte 120 und dem Referenzpotential *GND* gemessen wird, und die magnetische Feldkomponente über einen Spannungsabfall über eine zweite Impedanz *Z₂*, die zwischen dem zweiten Messsignalanschluss 132 und dem Referenzpotential *GND* geschaltet ist, gemessen wird.

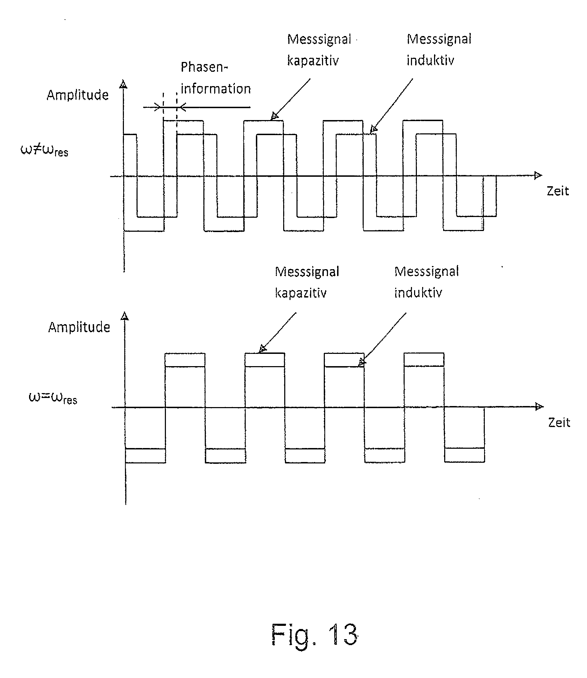

Fig. 13 zeigt einen idealisierten möglichen Signalverlauf für das Spannungsmesssignal und das Strommesssignal, wobei ein zeitlicher Verlauf der Amplitude beider Messsignale (kapazitiv und induktiv) dargestellt ist. Im oben gezeigten Fall liegt keine Resonanz vor (f ≠ f_{RES}) und im darunter dargestellten Fall liegt eine Resonanz am Motor vor (f = f_{RES}). Wie aus der Figur ersichtlich ist, sind im Resonanzfall sowohl das Spannungs- als auch das Stromsignal so ausgebildet, dass sie eine gleiche Frequenz aufweisen und am Motor keine relative Phasenverschiebung haben (laufen phasengleich). Wenn jedoch der Resonanzpunkt verlassen wird, kommt es zu einer Phasenverschiebung zwischen dem Spannungsmesssignal und dem Strommesssignal, was oben in der Fig. 13 dargestellt ist, wobei die gezeigte Phaseninformation die Phasenverschiebung zwischen dem Spannungsmesssignal und dem Strommesssignal wiedergibt. Umgekehrt fühlt die in der Fig. 13 gezeigte Phasenverschiebung zu einem Verlassen der Resonanzpunkte (Dissonanz). Bei dem in der Fig. 13 gezeigten Ausführungsbeispiel ist das eine Messsignal amplitudenmäßig größer als das andere Messsignal, was jedoch lediglich der Darstellbarkeit dient und bei weiteren Ausführungsbeispielen anders sein kann. In der Fig. 13 sind ferner in idealisierter Form Rechteckimpulse dargestellt, wobei die Rechteckimpulse gleichermaßen auch harmonische Schwingungen in Form von Sinus- oder Cosinus-Schwingungen sein können.

Die Phasenverschiebung, wie sie in der Fig. 13 oben dargestellt ist, hat zur folge, dass beispielsweise das Spannungsmesssignal dem Strommesssignal nach- oder vorläuft und somit beispielsweise ein Piezo-Element (z.B. Piezo-Motor) nicht in der Resonanz arbeitet. Das hat zur Folge, dass zusätzliche Verluste auftreten, die die vorliegende Erfindung vermeiden möchte. Befindet sich das System nicht im Resonanzfall (f ≠ f_{RES}), so entsteht eine Regelabweichung, die sich in Form der gezeigten Phaseninformation ausprägt. Auch die Signalform, die in der Fig. 13 idealisiert dargestellt ist, ändert sich je nach hardwaremäßiger Regelauslegung. Die Signalform kann sich im Regelbetrieb signifikant ändern, je nachdem, wie die elektrische Schaltung ausgelegt bzw. der Piezo-Motor mechanisch belastet wurde.

Im Resonanzfall (f = f_{RES}) befindet sich die zu treibende Last 150, also beispielsweise der Piezo-Motor sowie die Teile der Schaltungen der elektronischen Antriebsschaltung, in einem nahezu ideal resistiven Zustand (Strom und Spannungssignale weisen eine gleiche Phase aufkeine Phasenverschiebung). Dadurch ergeben sich Strommaxima sowie Spannungsminima, die sich mit Hilfe der kapazitiven/induktiven Sensoren, wie sie die vorliegende Erfindung beschreibt, leicht erfassen lassen. Die Messsignale (beispielsweise Strom und Spannung) können als Regel- oder Stellgrößen in den geschlossenen Regelkreis einfließen. Die Effektivwerte dieser Signale werden vorwiegend bestimmt durch die Geometrie bzw. die Materialien der kapazitiven Sensoren.

Mit Hilfe der Sensoren, wie sie die vorliegende Erfindung definiert, ist es aber nicht nur möglich, eine optimale Betriebsfrequenz (Resonanz) zu suchen, sondern es ist auch eine relativ genaue Bestimmung der Signalverläufe von Strom und Spannung möglich, um dadurch eine entsprechend genaue Erfassung der Leistung zu erhalten. Dies bewirkt gleichzeitig eine Optimierung der Elektronik (Wirkungsgrad) sowie eine Optimierung der abgegebenen mechanischen Leistung an der Piezo-Spitze des beispielhaften dentalen Handstückes.

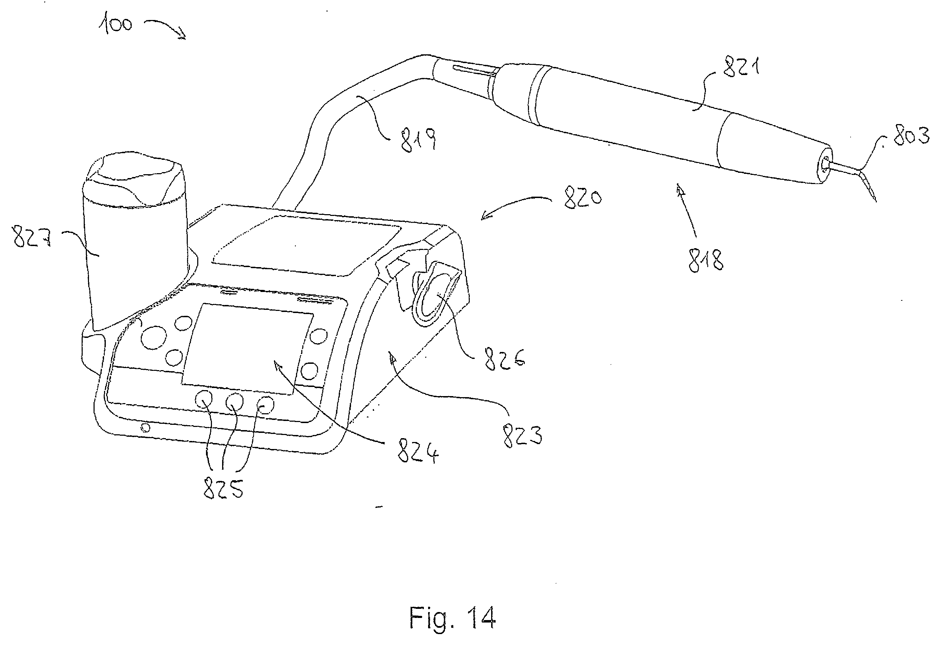

Fig. 14 zeigt die medizinische, insbesondere dentale, Behandlungsvorrichtung 100, die als Zahnsteinentfernungs- oder Scaler-Behandlungsvorrichtung ausgebildet ist. Sie besteht beispielsweise aus einem Handgriffelement oder Handstück 818, einem Steuergerät 820 und einem Versorgungs- oder Verbindungsschlauch 819, der das Steuergerät 820 und das Handstück 818 verbindet.

Das gerade, längliche Handstück 818 weist eine zylindrische, hohle Außenhülse 821 auf, in der unter anderem eine Antriebseinheit für eine mit dem Handstück 818 verbindbarem Werkzeug 803 angeordnet ist. Das Steuergerät 820 weist ein Gehäuse 823 mit einer Anzeige 824 für feststehende oder einstellbare Betriebsparameter auf. Ferner sind mehrere Stellelemente 825, beispielsweise ein Drucktaster, zur Auswahl oder Änderung der Betriebsparameter und eine Handstückablage 826 und eine Flüssigkeitsquelle 827 mit einer Kühl- oder Spülflüssigkeit ausgebildet.

Die Versorgungsleitung oder der Verbindungsschlauch 819 enthält beispielsweise mehrere Medien- oder Betriebsmittelleitungen, insbesondere elektrische Leitungen, die die Antriebseinheit mit entsprechenden Energiequellen verbinden.

Der Sensor, wie er beispielsweise in der Fig. 1 gezeigt ist, kann im Handstück 818, dem Steuergerät 820 oder der Versorgungsleitung 819 angeordnet sein und damit die erfindungsgemäße medizinische Behandlungsvorrichtung bilden.

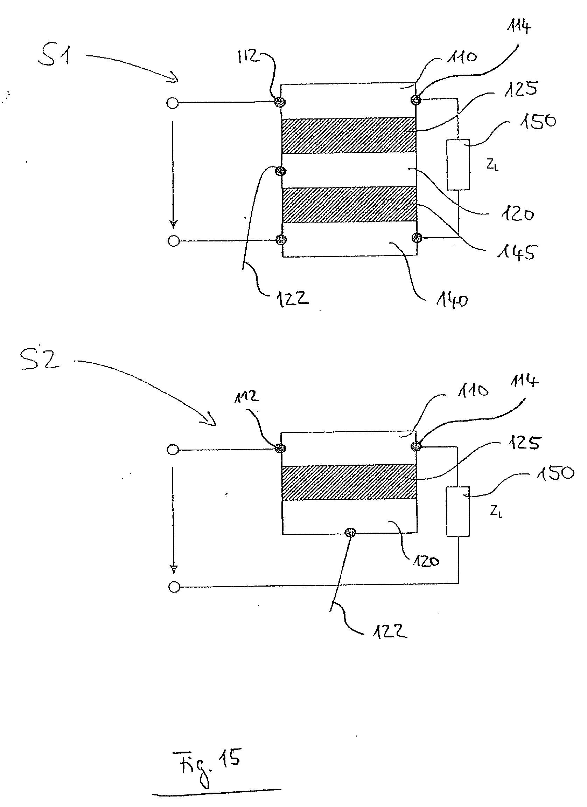

Fig. 15 zeigt Ausführungsbeispiele von rein kapazitiven Sensoreinheiten S1 und S2. Eine erste Sensoreinheit S1 ist als eine Schichtstruktur mit der ersten Planarelektrode 110 (kann auch als Kontaktelektrode ausgebildet sein), dem ersten Dielektrikum 125, der zweiten Planarelektrode 120, einem dritten Dielektrikum 145 und einer vierten Kontaktelektrode 140 gebildet. Eine zweite Sensoreinheit S2 wird nur durch die ersten Planarelektrode 110, dem zweiten Dielektrikum 135 und der dritten Planarelektrode 130 gebildet, wobei alle Kontaktelektroden und dielektrischen Schichten schichtförmig übereinander angeordnet sind, wie es beispielsweise in den zuvor gezeigten Ausführungsbeispielen dargestellt ist. Das kapazitive Messsignal am ersten Messsignalanschluss kann beispielsweise einer Regel- oder Steuereinheit zugeführt werden, die nicht mit der Stromversorgung der Behandlungsvorrichtung in direktem Kontakt steht, sondern lediglich über ein Steuersignal die Versorgungseinheit steuert.

Die beiden Sensoren S1 und S2 können einzeln realisiert sein. Wenn Sie einzeln realisiert sind, erfassen sie eine Messgröße wie beispielsweise einen Strom oder eine Spannung oder eine relative Phase zwischen einem Strom- und einem Spannungssignal. Sie können aber auch raumartig voneinander getrennt sein und ein erstes und ein zweites kapazitive Messsignal erfassen. Beispielsweise kann einer der beiden Sensoren S1, S2 in dem Handstück der Behandlungsvorrichtung oder der Verbindungsleitung ausgebildet sein, währenddessen der andere der beiden Sensoren S1, S2 entsprechend entweder in der Verbindungsleitung oder in der Versorgungseinheit angeordnet ist. Bei weiteren Ausführungsbeispielen kann die erste Sensoreinheit S1 auf der Primärseite und die zweite Sensoreinheit S2 auf der Sekundärseite ausgebildet. Umgekehrt kann ebenfalls die zweite Sensoreinheit S2 auf der Primärseite und die erste Sensoreinheit S1 auf der Sekundärseite ausgebildet sein.

Ausführungsbeispiele der vorliegenden Erfindung umfassen somit einen Sensor zur getrennten oder kombinierten Erfassung von Strom und Spannung und können wie folgt zusammengefasst werden. Es wird beispielsweise das Prinzip eines Plattenkondensators, der zwei- oder dreidimensional realisiert werden kann und beispielsweise ein PCB (PCB = Printed Circuit Board) umfasst, ausgenutzt, um kapazitiv/induktiv zwei der Strom- und Spannungsgrößen zu erfassen. Als Materialien kommen beispielsweise Materialien mit Materialkennung FR4, keramische Basisträger mit aufgedruckten isolierenden und leitfähigen Strukturen, Folienstrukturen oder auch koaxiale Anordnungen in Betracht. Ein besonderes Merkmal von Sensoren, wie sie in Ausführungsbeispielen der vorliegenden Erfindung benutzt werden, ist dass diese Sensoren eine einfache, störsichere und kostengünstige Integration in bereits vorhandenen Komponenten erlauben. Beispielsweise können sie als Elektronikprints (zweidimensionale Strukturen) oder in Leitungen zum Anwendungsteil wie beispielsweise einem Kabel (dreidimensionale Struktur) untergebracht werden. Ein weiteres Merkmal dieser Sensoren ist deren flexible Anpassungsmöglichkeit an die jeweilige Messaufgabe durch eine Wahl der Geometrie der Strukturen (z.B. Flächenabmessungen oder auch Schichtungen). Ferner kann in Abhängigkeit von Einspeise- und Auskopplungspunkten sowie von Abnahmepunkten die Ladungsdichteverteilung im stationären Fall, aber auch eine Änderung dieser Ladungsdichteverteilung im dynamischen Fall ermittelt werden.

Ausführungsbeispiele erlauben somit eine Kombination von Strom- und Spannungsmessungen in einem Sensor (einer mehrschichtigen Struktur) oder auch eine getrennte Messung von Strom und Spannung durch Aufbau und geeigneter Wahl von Einspeisepunkten, Ausspeisepunkten sowie Abnahmepunkte für die Messgrößen. Als Messgrößen sind beispielsweise die Amplitude, Phase und der Signalverlauf des Spannungs- als auch des Stromsignal möglich. Ebenso ist es möglich, durch das Material der elektrisch leitenden und isolierenden Strukturen eine Anpassung an die Messaufgabe beispielsweise durch eine Führung der elektrischen Feldlinien zu erreichen. Dies ist unter Anderem für die Baugröße der Anordnung relevant als auch für die Störsicherheit (z.B. Vernichtung von Störkapazitäten). Ferner ist es möglich eine passive oder auch aktive Abschirmung zu erreichen.

Wie zuvor gezeigt ist eine getrennte Anordnung der induktiven und kapazitiven Kopplung ebenso möglich. Beispielsweise können einzelne 2-Plattenanordnungen einen kapazitiven Sensor bilden, der eine kapazitive Kopplung bereitstellt und einzelne 2-Spulenanordnungen einen induktiven Sensor definieren, der eine induktive Kopplung bereitstellt. Eine 2-Plattenanordnung (kapazitiven Sensor) kann mit einer 2-Spulenanordnung (einen induktiven Sensor) kombiniert werden oder auch getrennt werden. Mehrfachkombinationen sind ebenfalls möglich, bei denen mehrere der gezeigten kapazitiven bzw. induktiven Sensoren miteinander verschaltet werden. Die Geometrie der Spulen und kapazitiven Platten können geometrisch zu einander abweichen. Je nach Gesamtgeometrie der Planarspulen kann die Windungszahl relativ gering ausfallen. Beispielsweise kann es sinnvoll sein, für die Planarspule eine Printgeometrie zu wählen, die sich aus der Arbeitsfrequenz ergibt, die sehr niedrige oder auch sehr hohe Frequenzen umfassen kann (z.B. mehrere 10 kHz oder bis zu mehreren 100 MHz). Am Print aufgesetzte Spulen mit Ferritkernen können je nach Induktivität vorwiegend bei geringen Frequenzen (z.B. einigen Hertz bis mehreren 100 kHz) genutzt werden.

Optional kann einen oder mehrere dielektrische Schichten als eine Folie ausgebildet sein, die Elektroden bedrucktes oder aufgedampftes leitfähiges Material sein. Der Sensor kann als Schichtstapel bestehend aus einzelnen übereinanderliegenden Schichten realisiert sein, wobei die Schichten in dem Schichtstapel alle eine gleiche laterale Ausdehnung (Fläche) aufweisen. Es kann aber auch eine pyramiden- oder kegelförmige Anordnung gewählt werden, bei der beispielsweise einige der Planarelektroden 110, 120 und/oder das Induktionselement 130 flächenmäßig unterschiedlich stark ausgebildet sind, sodass die Kapazität ganz gezielt zwischen den Planarelektroden wählbar ist. Die Primär- und/oder Sekundärplatten können optional auch als parallel verlaufende Leiterbahnen auf Leiterplatten realisiert werden. Das Induktionselement 130 kann als Spule (auch als Planarspule) ausgebildet sein, aber auch andere Bauelemente aufweisen, die aus einem veränderlichen elektro-magnetischen Feld eine elektrisches Signal erzeugen. Optional sind die Induktivitäten der ersten Planarelektrode 110 und des Induktionselementes 130 fest eingestellt und nicht variabel. Ebenso ist die Kapazität zwischen der ersten Planarelektrode 110 und der zweiten Planarelektrode 120 optional fest eingestellt und nicht variabel.

Ausführungsbeispiele bieten weitere Vorteile. Beispielsweise kann der Sensor monolithisch in einem Bauelement unter Nutzung eines Substrates integriert sein. Eine 2-Elektrode-/Plattenanordnung und eine 2-Spulenanordnung können beispielsweise räumlich nebeneinander oder getrennt angeordnet werden. Bei einer kombinierten Anordnung wird ein Bauteil des Sensors sowohl für die kapazitive Messung als auch für die induktive Messung verwendet. Dieses Bauteil ist als Planarspule zwischen einer Platte/Elektrode und einer weiteren Spule (Sekundärspule) angeordnet und bildet einerseits mit der Platte/Elektrode die kapazitive Komponente und andererseits mit der Sekundärspule die induktive Komponente. Der Vorteil dieses kapazitiv-induktiven Sensors besteht unter anderem in der geringen Baugröße und damit dem geringen Platzverbrauch in der Behandlungsvorrichtung. Der Sensor dient wiederum der (gleichzeitigen) Bestimmung von Spannung und Strom.

Bei gewissen Anwendungen reicht jedoch ein Sensorteil (und damit die Messung von entweder Strom oder Spannung) aus, um die Behandlungsvorrichtung betreiben zu können.

Ausführungsbeispiele umfassen ebenfalls ein Verfahren zur Regelung einer Last 150 der beschriebenen medizinischen Behandlungsvorrichtung, wobei das Verfahren umfasst: ein Erfassen des kapazitiven Messsignals, ein Erfassen des induktiven Messsignals, ein Ermitteln eines Steuersignals basierend auf dem kapazitiven Messsignal und dem induktiven Messsignal und ein Bereitstellen des Steuersignals einer Versorgungseinheit derart, dass das Steuersignal das elektrische Eingangssignal ändert. In dem Verfahren kann optional das Steuersignal derart bereitgestellt werden, dass die Phasenverschiebung zwischen dem Stromsignal und dem Spannungssignal verringert wird, um einen resonanten Betrieb der Last herzustellen. Ebenso kann in dem Verfahren das Steuersignal ausgebildet sein, um eine Wirkleistung, die von der Last aufgenommen wird, derart zu ändern, dass sich der Wirkungsgrad der Behandlungsvorrichtung erhöht. Somit nutzt das Verfahren beispielsweise die medizinische Behandlungsvorrichtung, wie sie zuvor beschrieben wurde.
- 100: medizinische, insbesondere dentale, Behandlungsvorrichtung
- 110: erste Planarelektrode
- 112: Strompfadeingang
- 114: Strompfadausgang
- 117: erster Spulenkern
- 118: Generator/Versorgungseinheit
- 120: zweite Planarelektrode
- 122: erster Messsignalausgang
- 125: erstes Dielektrikum
- 130: Induktionselement
- 132: zweiter Messsignalanschluss
- 134: dritter Messsignalanschluss
- 135: zweites Dielektrikum
- 137: zweiter Spulenkern
- 138: Montagebügel
- 139a-d: weiteres magnetisches/dielektrisches Material
- 145: weiteres Dielektrikum
- 150: Last
- 310: erstes Anpassungsnetzwerk
- 320: zweites Anpassungsnetzwerk
- 803: verbindbarem Werkzeug
- 818: Handstück
- 819: Versorgungs- oder Verbindungsschlauch
- 820: Steuergerät
- 821: zylindrische, hohle Außenhülse
- 823: Gehäuse
- 824: Anzeige
- 825: Stellelemente
- 826: Handstückablage
- 827: Flüssigkeitsquelle

## Patentansprüche

1. Medizinische Behandlungsvorrichtung (100) mit einem Sensor zum Erfassen von Betriebszuständen der medizinischen Behandlungsvorrichtung, wobei der Sensor Folgendes umfasst:
eine erste Planarelektrode (110), die zwischen einem Strompfadeingang (112) und einem Strompfadausgang (114) angeordnet ist, wobei ein elektrisches Eingangssignal zur Versorgung der medizinischen Behandlungsvorrichtung an dem Strompfadeingang (112) anlegbar ist und eine Last (150) der medizinischen Behandlungsvorrichtung (100) an dem Strompfadausgang (114) anlegbar ist;
eine zweite Planarelektrode (120), die von der ersten Planarelektrode (110) durch ein erstes Dielektrikum (125) getrennt ist und einen ersten Messsignalanschluss (122) zum Abgreifen eines kapazitiven Messsignals aufweist, wobei die erste Planarelektrode (110) und die zweite Planarelektrode (120) kapazitiv koppelbar sind.

2. Medizinische Behandlungsvorrichtung (100) nach Anspruch 1, wobei die erste Planarelektrode (110) als eine Planarspule ausgebildet ist und die weiter Folgendes aufweist:
ein Induktionselement (130), das von der ersten Planarelektrode (110) durch ein zweites Dielektrikum (135) getrennt ist und zwischen einem zweiten Messsignalanschluss (132) und einem dritten Messsignalanschluss (134) ausgebildet ist, wobei zwischen dem zweiten Messsignalanschluss (132) und dem dritten Messsignalanschluss (134) ein induktives Messsignal abgreifbar ist,
wobei die erste Planarelektrode (110) einen Querschnitt senkrecht zur Ausbreitungsrichtung des elektrischen Eingangssignals aufweist, um so die erste Planarelektrode (110) und die zweiten Planarelektrode (120) kapazitiv zu koppeln und gleichzeitig die erste Planarelektrode (110) und das Induktionselement (130) induktiv koppelbar sind.

3. Behandlungsvorrichtung (100) nach Anspruch 2, wobei das Induktionselement (130) als eine weitere Planarspule mit einer größeren Windungszahl als die Planarspule ausgebildet ist.

4. Behandlungsvorrichtung (100) nach Anspruch 2 oder Anspruch 3, wobei die erste Planarelektrode (110) zwischen der zweiten Planarelektrode (120) und dem Induktionselement (130) angeordnet ist.

5. Behandlungsvorrichtung (100) nach einem der Ansprüche 2 bis 4, wobei die Planarspule oder das als weitere Planarspule ausgebildete Induktionselement (130) einen weichmagnetischen Spulenkern aufweist.

6. Behandlungsvorrichtung (100) nach einem der Ansprüche 2 bis 5, wobei das erste Dielektrikum (125) und das zweite Dielektrikum (135) eine gemeinsame Dielektrikumsschicht (125, 135) bilden und die zweite Planarelektrode (120) und das Induktionselement (130) lateral nebeneinander auf einer Seite der gemeinsamen Dielektrikumsschicht (125, 135) angeordnet sind, wobei die erste Planarelektrode (110) gegenüberliegend der zweiten Planarelektrode (120) und gegenüberliegend dem Induktionselement (130) auf einer gegenüberliegenden Seite der gemeinsamen Dielektrikumsschicht (125, 135) angeordnet ist.

7. Behandlungsvorrichtung (100) nach Anspruch 6, wobei die erste Planarelektrode (110) einen ersten Teil (110a) und einen zweiten Teil (110b) umfasst, wobei der erste Teil (110a) gegenüberliegend der zweiten Planarelektrode (120) angeordnet ist, und wobei der zweite Teil (110b) gegenüberliegend dem Induktionselement (130) angeordnet ist, und wobei der erste Teil (110a) und der zweite Teil (110b) entlang der gemeinsamen Dielektrikumsschicht (125, 135) lateral versetzt zueinander angeordnet sind.

8. Behandlungsvorrichtung (100) nach einem der Ansprüche 2 bis 5, wobei die erste Planarelektrode (110) einen ersten Teil (110a) und einen zweiten Teil (110b) aufweist, wobei der erste Teil (110a) als eine Kondensatorplatte ausgebildet ist und bezüglich des ersten Dielektrikums (125) gegenüberliegend der zweiten Planarelektrode (120) angeordnet ist, und wobei der zweite Teil (110b) bezüglich des zweiten Dielektrikums (135) gegenüberliegend von dem Induktionselement (130) angeordnet ist, und wobei der erste Teil (110a) und der zweite Teil (110b) räumlich voneinander getrennt sind und mit einer Verbindungsleitung (110c) elektrisch miteinander verbunden sind.

9. Behandlungsvorrichtung (100) nach einem der Ansprüche 2 bis 8, wobei die zweite Planarelektrode (120) oder das Induktionselement (130) zumindest teilweise in einem weichmagnetischen Ferritmaterial eingebettet ist.

10. Behandlungsvorrichtung (100) nach einem der Ansprüche 2 bis 9, die ferner umfasst:
eine Auswerteeinheit (530), die ausgebildet ist, um das kapazitive Messsignal und das induktive Messsignal zu erfassen und darauf basierend ein Stromsignal und/oder ein Spannungssignal und/oder ihre relative Phasenbeziehung und/oder eine Frequenz für das elektrische Eingangssignal zu ermitteln.

11. Behandlungsvorrichtung (100) nach Anspruch 10, wobei die Auswerteeinheit (530) ausgebildet ist, um ein Steuersignal (540) basierend auf dem ermittelten Stromsignal und/oder dem Spannungssignal und/oder der Frequenz und/oder der Phase zu erzeugen und für eine Versorgungseinrichtung (610), die das elektrische Eingangssignal erzeugt, bereitzustellen, wobei das Steuersignal (540) ausgebildet ist, um die Versorgungseinrichtung (610) zu einer Änderung des elektrischen Eingangssignals zu veranlassen.

12. Behandlungsvorrichtung (100) nach Anspruch 10 oder Anspruch 11, wobei die Auswerteeinheit (530) ausgebildet ist, um über das Steuersignal (540) die relative Phasenverschiebung zu eliminieren, um einen resonanten Betrieb der Behandlungsvorrichtung (100) herzustellen.

13. Behandlungsvorrichtung (100) nach einem der Ansprüche 2 bis 12, wobei das induktive Messsignal sich auf ein erstes Referenzpotential (GNDA) und das kapazitive Messsignal sich auf ein zweites Referenzpotential (GNDB) beziehen.

14. Behandlungsvorrichtung (100) nach einem der vorhergehenden Ansprüche, die ferner umfasst:
ein Handstück (818) mit Piezo-Motor oder ein Steuergerät (820) für das Handstück (818) mit Piezo-Motor oder eine Versorgungsleitung (819) des Handstücks (818) mit Piezo-Motor.

15. Verfahren zur Regelung einer Last (150) einer medizinischen Behandlungsvorrichtung, die mit einem elektrischen Eingangssignal über eine erste Planarelektrode (110) von einer Versorgungseinheit (118) versorgt wird, eine zweite Planarelektrode (120) aufweist, an der ein kapazitives Messsignal abgreifbar ist, wobei die erste Planarelektrode (110) und die zweite Planarelektrode (120) kapazitiv koppelbar sind, und ein Induktionselement (130) aufweist, an dem ein induktives Messsignal abgreifbar ist, mit folgenden Schritten:
Erfassen des kapazitiven Messsignals;
Erfassen des induktiven Messsignals;
Ermitteln eines Steuersignals basierend auf dem kapazitiven Messsignal und dem induktiven Messsignal; und
Bereitstellen des Steuersignals einer Versorgungseinheit (118) derart, dass das Steuersignal das elektrische Eingangssignal ändert.

## Claims

1. A medical treatment device (100) having a sensor for detecting operating states of the medical treatment device, wherein the sensor comprises the following:
a first planar electrode (110) that is arranged between a current path input (112) and a current path output (114), wherein an electrical input signal for supplying the medical treatment device can be applied to the current path input (112) and a load (150) of the medical treatment device (100) can be applied to the current path output (114);
a second planar electrode (120) that is separate from the first planar electrode (110) by a first dielectric (125) and exhibits a first measuring-signal terminal (122) for tapping a capacitive measuring signal, wherein the first planar electrode (110) and the second planar electrode (120) can be coupled capacitively.

2. The medical treatment device (100) according to Claim 1, wherein the first planar electrode (110) is designed as a planar coil and that further exhibits the following:
an induction element (130) that is separate from the first planar electrode (110) by a second dielectric (135) and is formed between a second measuring-signal terminal (132) and a third measuring-signal terminal (134), wherein an inductive measuring signal can be tapped between the second measuring-signal terminal (132) and the third measuring-signal terminal (134),
wherein the first planar electrode (110) exhibits a cross section perpendicular to the propagation direction of the electrical input signal in order to, in this way, couple the first planar electrode (110) and the second planar electrode (120) capacitively and, at the same time, the first planar electrode (110) and the induction element (130) can be coupled inductively.

3. The treatment device (100) according to Claim 2, wherein the induction element (130) is designed as a further planar coil having a greater number of turns than the planar coil.

4. The treatment device (100) according to Claim 2 or Claim 3, wherein the first planar electrode (110) is arranged between the second planar electrode (120) and the induction element (130).

5. The treatment device (100) according to one of Claims 2 to 4, wherein the planar coil or the induction element (130) that is designed as a further planar coil exhibits a magnetically soft coil core.

6. The treatment device (100) according to one of Claims 2 to 5, wherein the first dielectric (125) and the second dielectric (135) form a joint dielectric layer (125, 135) and the second planar electrode (120) and the induction element (130) are arranged laterally one beside the other on one side of the common dielectric layer (125, 135), wherein the first planar electrode (110) is arranged opposite the second planar electrode (120) and opposite the induction element (130) on an opposite side of the joint dielectric layer (125, 135).

7. The treatment device (100) according to Claim 6, wherein the first planar electrode (110) comprises a first part (110a) and a second part (110b), wherein the first part (110a) is arranged opposite the second planar electrode (120) and wherein the second part (110b) is arranged opposite the induction element (130), and wherein the first part (110a) and the second part (110b) are arranged laterally offset to each other along the joint dielectric layer (125, 135).

8. The treatment device (100) according to one of Claims 2 to 5, wherein the first planar electrode (110) exhibits a first part (110a) and a second part (110b), wherein the first part (110a) is designed as a capacitor plate and, with regard to the first dielectric (125), is arranged opposite the second planar electrode (120), and wherein the second part (110b), with regard to the second dielectric (135), is arranged opposite the induction element (130), and wherein the first part (110a) and the second part (110b) are spatially separate from each other and are electrically connected to each other with a connecting line (110c).

9. The treatment device (100) according to one of Claims 2 to 8, wherein the second planar electrode (120) or the induction element (130) is at least partly embedded in a magnetically soft ferrite material.

10. The treatment device (100) according to one of Claims 2 to 9, that further comprises:
an evaluation unit (530) that is designed to detect the capacitive measuring signal and the inductive measuring signal and, based thereon, to determine a current signal and/or a voltage signal and/or their relative phase relation and/or a frequency for the electrical input signal.

11. The treatment device (100) according to Claim 10, wherein the evaluation unit (530) is designed to generate a control signal (540) based on the determined current signal and/or the voltage signal and/or the frequency and/or the phase and to provide it to a supply device (610) generating the electrical input signal, wherein the control signal (540) is designed to cause the supply device (610) to change the electrical input signal.

12. The treatment device (100) according to Claim 10 or Claim 11, wherein the evaluation unit (530) is designed to eliminate the relative phase shift via the control signal (540) in order to produce a resonant operation of the treatment device (100).

13. The treatment device (100) according to one of Claims 2 to 12, wherein the inductive measuring signal refers to a first reference potential (GNDA) and the capacitive measuring signal refers to a second reference potential (GNDB).

14. The treatment device (100) according to one of the preceding claims, that further comprises:
a handpiece (818) with piezo motor or a control device (820) for the handpiece (818) with piezo motor or a supply line (819) of the handpiece (818) with piezo motor.

15. A method for regulating a load (150) of a medical treatment device that is supplied with an electrical input signal via a first planar electrode (110) from a supply unit (118), that exhibits a second planar electrode (120) at which a capacitive measuring signal can be tapped, wherein the first planar electrode (110) and the second planar electrode (120) can be coupled capacitively, and that exhibits an induction element (130) at which an inductive measuring signal can be tapped, having the following steps:
detecting the capacitive measuring signal;
detecting the inductive measuring signal;
determining a control signal based on the capacitive measuring signal and the inductive measuring signal; and
providing the control signal to a supply unit (118) such that the control signal changes the electrical input signal.

## Revendications

1. Dispositif de traitement médical (100) comportant un capteur pour détecter les états de fonctionnement du dispositif de traitement médical, ledit capteur comportant les éléments suivants :
une première électrode plane (110) disposée entre une entrée de voie du courant (112) et une sortie de voie du courant (114), un signal d'entrée électrique pour l'alimentation du dispositif de traitement médical pouvant être appliqué à l'entrée de voie du courant (112) et une charge (150) du dispositif de traitement médical (100) pouvant être appliquée à la sortie de voie du courant (114) ;
une deuxième électrode plane (120) qui est séparée da la première électrode plane (110) par un premier diélectrique (125) et qui comporte un premier raccordement pour signal de mesure (122) permettant de capter un signal de mesure capacitif, la première électrode plane (110) et la deuxième électrode plane (120) pouvant être couplées de manière capacitive.

2. Dispositif de traitement médical (100) selon la revendication 1, dans lequel la première électrode plane (110) est réalisée sous la forme d'une bobine plane et ledit dispositif comporte, en plus, les éléments suivants :
un élément d'induction (130), qui est séparé de la première électrode plane (110) par un deuxième diélectrique (135) et qui est réalisée entre un deuxième raccordement pour signal de mesure (132) et un troisième raccordement pour signal de mesure (134), un signal de mesure inductif pouvant être capté entre le deuxième raccordement pour signal de mesure (132) et le troisième raccordement pour signal de mesure (134),
la première électrode plane (110) ayant une section transversale perpendiculaire à la direction de propagation du signal d'entrée électrique, afin de coupler ainsi de manière capacitive la première électrode plane (110) et la deuxième électrode plane (120) et, en même temps, de coupler de manière inductive la première électrode plane (110) et l'élément d'induction (130).

3. Dispositif de traitement médical (100) selon la revendication 2, dans lequel l'élément d'induction (130) est réalisé sous la forme d'une bobine plane supplémentaire avec un nombre d'enroulements supérieur à celui de la bobine plane.

4. Dispositif de traitement médical (100) selon la revendication 2 ou la revendication 3, dans lequel la première électrode plane (110) est disposée entre la deuxième électrode plane (120) et l'élément d'induction (130).

5. Dispositif de traitement médical (100) selon l'une quelconque des revendications 2 à 4, dans lequel la bobine plane ou l'élément d'induction (130), réalisé sous la forme d'une bobine plane supplémentaire, comportent un noyau magnétique doux.

6. Dispositif de traitement médical (100) selon l'une quelconque des revendications 2 à 5, dans lequel le premier diélectrique (125) et le deuxième diélectrique (135) forment une couche diélectrique (125, 135) commune, et la deuxième électrode plane (120) et l'élément d'induction (130) sont juxtaposés latéralement sur une face de la couche diélectrique (125, 135) commune, la première électrode plane (110) étant disposée en face de la deuxième électrode plane (120) et en face de l'élément d'induction (130) sur une face opposée de la couche diélectrique (125, 135) commune.

7. Dispositif de traitement médical (100) selon la revendication 6, dans lequel la première électrode plane (110) comporte une première partie (110a) et une deuxième partie (110b), la première partie (110a) étant disposée en face de la deuxième électrode plane (120), et la deuxième partie (110b) étant disposée en face de l'élément d'induction (130), et la première partie (110a) et la deuxième partie (110b) étant disposées en étant décalées latéralement l'une par rapport à l'autre le long de la couche diélectrique (125, 135) commune.

8. Dispositif de traitement médical (100) selon l'une quelconque des revendications 2 à 5, dans lequel la première électrode plane (110) comporte une première partie (110a) et une deuxième partie (110b), la première partie (110a) étant réalisée sous la forme d'une plaque de condensateur et étant disposée par rapport au premier diélectrique (125) en face de la deuxième électrode plane (120), et la deuxième partie (110b) étant disposée par rapport au deuxième diélectrique (135) en face de l'élément d'induction (130), et la première partie (110a) et la deuxième partie (110b) étant séparées physiquement l'une de l'autre et étant reliées électriquement l'une à l'autre par une ligne de liaison (110c).

9. Dispositif de traitement médical (100) selon l'une quelconque des revendications 2 à 8, dans lequel la deuxième électrode plane (120) ou l'élément d'induction (130) sont incorporés au moins partiellement dans un matériau ferritique magnétique doux.

10. Dispositif de traitement médical (100) selon l'une quelconque des revendications 2 à 9, qui comporte en plus :
une unité d'analyse (530), qui est configurée pour détecter le signal de mesure capacitif et le signal de mesure inductif et, en se basant sur ceux-ci, pour déterminer un signal de courant et/ou un signal de tension et/ou leur rapport de phase relatif et/ou une fréquence pour le signal d'entrée électrique.

11. Dispositif de traitement médical (100) selon la revendication 10, dans lequel l'unité d'analyse (530) étant configurée pour générer un signal de commande (540) basé sur le signal de courant et/ou le signal de tension et/ou la fréquence et/ou la phase déterminés et de les mettre à disposition d'un dispositif d'alimentation (610) qui génère le signal d'entrée électrique, le signal de commande (540) étant configuré pour pousser le dispositif d'alimentation (610) à modifier le signal d'entrée électrique.

12. Dispositif de traitement médical (100) selon la revendication 10 ou la revendication 11, dans lequel l'unité d'analyse (530) est configurée pour éliminer par l'intermédiaire du signal de commande (540) le décalage de phase relatif, afin d'établir un fonctionnement résonant du dispositif de traitement médical (100).

13. Dispositif de traitement médical (100) selon l'une quelconque des revendications 2 à 12, dans lequel le signal de mesure inductif se rapporte à un premier potentiel de référence (GNDA) et le signal de mesure capacitif se rapporte à un deuxième potentiel de référence (GNDB).

14. Dispositif de traitement médical (100) selon l'une quelconque des revendications précédentes, qui comporte en outre :
une pièce à main (818) avec moteur piézoélectrique ou un dispositif de commande (820) pour la pièce à main (818) avec moteur piézoélectrique ou une ligne d'alimentation (819) de la pièce à main (818) avec moteur piézoélectrique.

15. Procédé permettant le réglage d'une charge (150) d'un dispositif de traitement médical, qui reçoit un signal d'entrée électrique d'une unité d'alimentation (118) via une première électrode plane (110), comporte une deuxième électrode plane (120) sur laquelle un signal de mesure capacitif peut être capté, la première électrode plane (110) et la deuxième électrode plane (120) pouvant être couplées de manière capacitive, et comporte un élément d'induction (130) sur lequel un signal de mesure inductif peut être capté, ledit procédé comportant les étapes suivantes :
détection du signal de mesure capacitif ;
détection du signal de mesure inductif :
détermination d'un signal de commande basé sur le signal de mesure capacitif et le signal de mesure inductif ; et
mise à disposition du signal de commande à une unité d'alimentation (118) de telle sorte que le signal de commande modifie le signal d'entrée électrique.
